# FASCICULE DE BREVET EUROPEEN

(11) **EP 2 531 424 B1**
(45) Date de publication et mention de la délivrance du brevet: **01.10.2014**
(21) Numéro de dépôt: 11711608.7
(22) Date de dépôt: 04.02.2011
(51) Int. Cl.: B65G 1/08, B65G 47/88

(54) **DISPOSITIF COMPACT POUR DELIVRER DES OBJETS, NOTAMMENT DES BOITES DE MEDICAMENTS AU SEIN D'UNE PHARMACIE**
KOMPAKTE VORRICHTUNG ZUR VERTEILUNG VON OBJEKTEN, IM BESONDEREN ARZNEIMITTELSCHACHTELN, IN EINER APOTHEKE
COMPACT DEVICE FOR DISTRIBUTING OBJECTS, ESPECIALLY BOXES OF MEDICAMENTS, IN A PHARMACY

(30) Priorité: 05.02.2010 FR 1050843; 05.02.2010 FR 1050842
(43) Date de publication de la demande: 12.12.2012
(73) Titulaire: GB Developpement, 92800 Puteaux (FR)
(72) Inventeur: BOULAIS, Guillaume, F-92300 Levallois Perret (FR)
(74) Mandataire: Pontet Allano & Associes
(86) Numéro de dépôt international: PCT/FR2011/050232
(87) Numéro de publication internationale: WO 2011/095749

(56) Documents cités:
- NL-C2- 1 023 154
- US-A- 4 591 070

## Description

### Domaine technique

La présente invention concerne un dispositif pour délivrer des objets selon le préambule de la revendication 1. Le domaine de l'invention est plus particulièrement celui de la distribution de médicaments au sein d'une pharmacie.

Elle concerne aussi une installation de délivrance comprenant plusieurs dispositifs de délivrance selon le préambule de la revendication 1. Une telle installation peut en particulier comprendre une armoire de stockage de médicaments comprenant plusieurs dispositifs de délivrance selon l'invention, et être agencée pour distribuer à partir de l'armoire de stockage des médicaments vers une officine de pharmacie en fonction d'une ordonnance médicale en cours de traitement par le pharmacien.

### Etat de la technique antérieure

On connaît, selon l'état de la technique antérieure, des exemples de dispositif de délivrance d'objets et des exemples d'installation de délivrance comprenant plusieurs de ces dispositifs, et permettant :
- de gérer un stock de produits pharmaceutiques ou para pharmaceutiques stockés dans l'installation, et
- de délivrer de façon automatisée ces produits pharmaceutiques ou para pharmaceutiques stockés, ce qui évite au pharmacien ou au vendeur de perdre du temps en recherchant le ou les produits et ce qui permet au pharmacien ou au vendeur de consacrer plus de temps pour donner des conseils pratiques ou d'ordre médical relatifs à ces produits.

Bien souvent, ce type de dispositif ou d'installation a les inconvénients suivants :
- chaque dispositif de l'installation possède une épaisseur relativement importante, l'installation étant alors encombrante ;
- selon le système d'alimentation électrique de chacun des dispositifs, des parties métalliques extérieures accessibles au toucher d'un utilisateur peuvent être mises à différents potentiels électriques ; les risques d'électrocution ou de brulure d'un utilisateur ou de la création d'un court-circuit électrique sont importants ;

- lors de l'éjection d'un produit pharmaceutique ou para pharmaceutique pour délivrer ce produit, le dispositif de délivrance émet un bruit qui peut être fort et gênant pour une personne se trouvant à proximité dudit dispositif ; cette nuisance sonore devient extrêmement importante pour une personne travaillant à proximité d'une installation de délivrance comprenant un grand nombre de dispositifs de délivrance et agencée pour délivrer jusqu'à plusieurs produits pharmaceutiques ou para pharmaceutiques par seconde,
- chaque dispositif de l'installation émet en permanence un signal infrarouge d'identification, via une diode lisible par un stylo optique, ce qui gaspille de l'énergie car ce signal d'identification n'est réellement utile que très occasionnellement.

On connaît par exemple le dispositif décrit dans le document EP 1 155 978 A2.

Le document NL 1 023 154 décrit un dispositif pour délivrer des objets, selon le préambule de la revendication 1, comprenant une ligne de stockage. Cette ligne de stockage comprend une extrémité avant munie d'une tête d'éjection et une extrémité arrière. Des moyens pour générer une impulsion mécanique sont, comme la tête d'éjection, situés du côté de l'extrémité avant.

Le but de la présente invention est de résoudre au moins un des inconvénients précités, notamment :
- diminuer l'épaisseur d'un dispositif de délivrance ou l'encombrement d'une installation de délivrance, et/ou
- diminuer le risque d'électrocution d'un utilisateur ou le risque de création d'un court-circuit électrique, et/ou
- diminuer la nuisance sonore d'un dispositif de délivrance ou d'une installation de délivrance, et/ou
- diminuer la consommation en énergie d'un dispositif de délivrance ou d'une installation de délivrance, et/ou
- faciliter l'utilisation, l'installation ou la maintenance d'un dispositif de délivrance ou d'une installation de délivrance.

### Exposé de l'invention

L'invention décrit un dispositif pour délivrer des objets selon la revendication 1.

La butée peut :
- soit faire partie du dispositif selon l'invention : dans ce cas, le dispositif selon l'invention comprend la butée qui est agencée pour bloquer un des objets à l'extrémité avant, ou
- soit faire partie d'une installation de délivrance et/ou d'une traverse (de préférence une traverse avant) à laquelle est fixé le dispositif selon l'invention.

Les moyens de génération peuvent comprendre des moyens pour transformer une énergie électrique en énergie mécanique pour générer l'impulsion mécanique d'éjection.

Les moyens de génération sont de préférence agencés pour générer en tant qu'impulsion d'éjection, au niveau de l'extrémité arrière, une impulsion purement mécanique dénuée de composante d'énergie électrique.

Les moyens de génération de l'impulsion peuvent comprendre un électroaimant.

De préférence, la ligne de stockage est rectiligne et s'étend le long d'une direction longitudinale.

Les moyens de transmission peuvent comprendre un corps creux longitudinal et un membre longitudinal, le membre étant de préférence agencé pour coulisser à l'intérieur du corps creux pour transmettre l'impulsion mécanique par un mouvement du membre à l'intérieur du corps creux.

Selon la variante considérée :
- le membre est de préférence muni de cannelures qui ne sont pas en contact du corps creux et/ou de bosses ou reliefs qui sont en contact du corps creux, et/ou
- le corps creux peut être muni de cannelures qui ne sont pas en contact du membre longitudinal et/ou de bosses ou reliefs qui sont en contact du membre longitudinal.

De préférence, le membre longitudinal n'est en contact du corps creux que par des lignes ou des points de contact, sans surface de contact entre le corps creux et le membre.

Le corps creux peut avoir une forme cylindrique et le membre peut avoir une forme polygonale.

Le membre est de préférence en une matière légère telle une matière plastique, ou un matériau composite comme de la fibre de verre ou de la fibre de carbone qui est plus solide mais plus chère que du plastique.

Le dispositif selon l'invention peut comprendre en outre des moyens de connexion pour connecter l'extrémité arrière à une installation de délivrance.

Les moyens de connexion peuvent comprendre des moyens de clipsage agencés pour fixer l'extrémité arrière à l'installation de délivrance et des moyens pour connecter électriquement l'extrémité arrière à l'installation de délivrance.

De manière préférentielle, les moyens de connexion sont décalés longitudinalement par rapport aux moyens de génération.

Le dispositif selon l'invention peut posséder, à l'endroit où sont situés les moyens de connexion, une épaisseur inférieure à l'épaisseur du dispositif à l'endroit où sont situés les moyens de génération.

Les moyens pour connecter électriquement l'extrémité arrière à l'installation de délivrance peuvent comprendre plusieurs languettes souples agencées pour conduire un signal électrique et agencées pour être déformées dans un état de connexion à l'installation de délivrance par rapport à un état non connecté à l'installation de délivrance.

De manière préférentielle, le dispositif selon l'invention ne comprend pas de moyens pour connecter l'extrémité avant à l'installation de délivrance.

Le dispositif selon l'invention peut comprendre des moyens électriques pour recevoir un signal électrique de commande et pour commander les moyens de génération en fonction dudit signal.

Les moyens de transmission peuvent comprendre, au niveau de l'extrémité avant, un moyen élévateur agencé pour, sous l'action de l'impulsion d'éjection, surélever par rapport à la butée l'objet bloqué.

Selon une autre particularité de l'invention, il est proposé une installation de délivrance, caractérisée en ce qu'elle comprend plusieurs dispositifs selon l'invention.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 est une vue schématique de coupe de profil de deux dispositifs de délivrance selon l'état de la technique antérieure superposés l'un au-dessus de l'autre,
- la figure 2 est une vue schématique de coupe de profil de deux dispositifs de délivrance selon l'invention superposés l'un au-dessus de l'autre,
- la figure 3 est une vue plus détaillée de coupe de profil de l'extrémité avant et de l'extrémité arrière d'un dispositif de délivrance selon l'invention, l'extrémité avant reposant sur une traverse avant d'une installation de délivrance selon l'invention et l'extrémité arrière reposant sur une traverse arrière de l'installation de délivrance selon l'invention,
- les figures 4 à 6 illustrent trois variantes selon l'invention de moyens de transmission mécanique de l'impulsion d'éjection, reliant des moyens de génération de l'impulsion à un moyen élévateur,
- La figure 7 est un plan schématique de moyens électroniques d'un dispositif selon l'invention,
- les figures 8 et 9 sont des vues de trois quart de l'extrémité avant d'une première variante d'un dispositif selon l'invention,
- les figures 10 et 11 sont des vues de coupe de profil de l'extrémité avant de la première variante d'un dispositif selon l'invention,
- les figures 12 et 13 sont des vues de trois quart de l'extrémité avant d'une deuxième variante d'un dispositif selon l'invention,
- les figures 14 et 15 sont des vues de coupe de profil de l'extrémité avant de la deuxième variante d'un dispositif selon l'invention,
- les figures 16 et 17 sont des vues de trois quart de l'extrémité avant d'une troisième variante d'un dispositif selon l'invention,
- les figures 18 et 19 sont des vues de coupe de profil de l'extrémité avant de la troisième variante d'un dispositif selon l'invention,
- la figure 20 illustre une installation de délivrance selon l'invention comprenant plusieurs dispositifs selon l'invention,
- la figure 21 est un schéma de principe de connexion entre des moyens de gestion et chacun des dispositifs selon l'invention appartenant à l'installation de délivrance de la figure 20,
- la figure 22 illustre une partie d'une traverse arrière d'une installation de délivrance selon l'invention et l'extrémité arrière d'un dispositif selon l'invention non fixée à la traverse arrière,
- la figure 23 est un agrandissement de la fenêtre B représentée sur la figure 22,
- la figure 24 illustre une partie d'une traverse arrière d'une installation de délivrance selon l'invention et l'extrémité arrière d'un dispositif selon l'invention fixée à la traverse arrière,
- la figure 25 est un agrandissement de la fenêtre A représentée sur la figure 24,
- la figure 26 illustre une partie d'une traverse avant d'une installation de délivrance selon l'invention et l'extrémité avant d'un dispositif selon l'invention non positionnée sur la traverse avant,
- la figure 27 illustre une partie d'une traverse avant d'une installation de délivrance selon l'invention et l'extrémité avant d'un dispositif selon l'invention positionnée sur la traverse avant, et
- la figure 28 illustre une variante d'agencement de corps creux et de membre longitudinal d'un dispositif selon l'invention,
- la figure 29 illustre une variante d'emplacement de la butée.

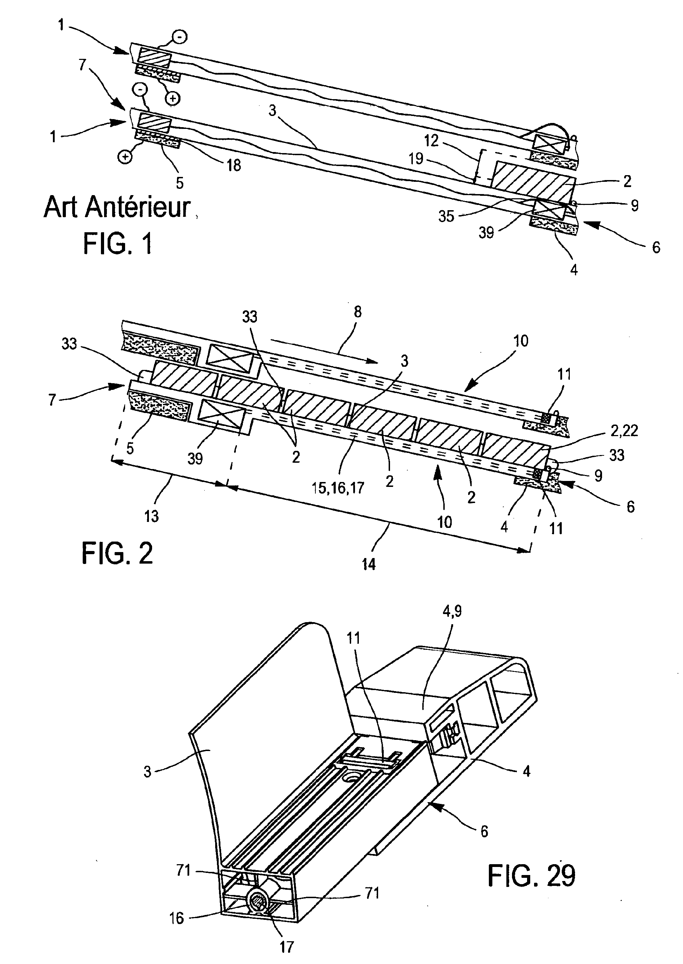

On va tout d'abord décrire, en référence à la figure 1, un dispositif 1 de délivrance selon l'état de la technique antérieure. Le dispositif 1 permet de stocker un objet 2 et de délivrer cet objet 2. Le dispositif 1 a la forme d'une glissière 3 rectiligne en aluminium et comprend une extrémité avant 6 et une extrémité arrière 7. L'extrémité avant 6 du dispositif 1 est agencée pour reposer sur une traverse avant 4 et l'extrémité arrière 7 du dispositif 1 est agencée pour reposer sur une traverse arrière 5, de sorte que l'extrémité arrière 7 soit surélevée par rapport à l'extrémité avant 6 pour faire coulisser sous l'action de la gravité l'objet 2 en direction de l'extrémité avant 6 jusqu'à ce que cet objet soit bloqué par une butée 9.

Un électroaimant 39 est situé au niveau de l'extrémité avant 6 et est muni d'une lame flexible 35. La lame flexible 35 est donc située au niveau de l'extrémité avant 6, et est en outre agencée pour, sous l'action de l'électroaimant, se déformer et fléchir de manière à entrer en contact avec l'objet 2 bloqué par la butée 9, l'objet 2 étant alors surélevé par rapport à la butée 9 et pouvant franchir cette butée 9 grâce à la gravité.

Pour l'alimentation de l'électroaimant 39, la traverse arrière 5 est mise à un pôle électrique positif et la glissière 3 est mise à un pôle électrique négatif. La traverse arrière 5 est séparée de la glissière 3 par une couche d'isolant électrique 18.

Au sein d'une installation de délivrance selon l'état de la technique antérieur, l'épaisseur totale d'un dispositif 1 et de l'espace nécessaire à l'éjection d'un objet 2 est égale à la somme de :
- l'épaisseur de la traverse avant 4,
- l'épaisseur de la glissière au niveau de l'extrémité avant 6 qui est au moins égale à l'épaisseur de l'électroaimant 39 et de la lame flexible 35,
- l'épaisseur 19 de la butée 9 et
- l'épaisseur 12 de l'objet 2.

En outre, le système d'éjection à lame flexible 35 est bruyant du fait de la déformation de la lame en acier 35 qui fléchit sous l'action de l'électroaimant 39.

Finalement, l'épaisseur de la couche d'isolant 18 étant relativement fine, on voit qu'il est assez facile pour un utilisateur de provoquer un court-circuit ou de s'électrocuter en disposant une surface conductrice d'électricité (réglette métallique, doigt, vis...) au niveau de l'extrémité arrière 7, une surface de quelques millimètres carrés étant suffisante pour connecter électriquement la glissière 3 et la traverse arrière 5.

On va maintenant décrire, en référence aux figures 2 à 7, un mode de réalisation préférentielle de dispositif 10 selon l'invention.

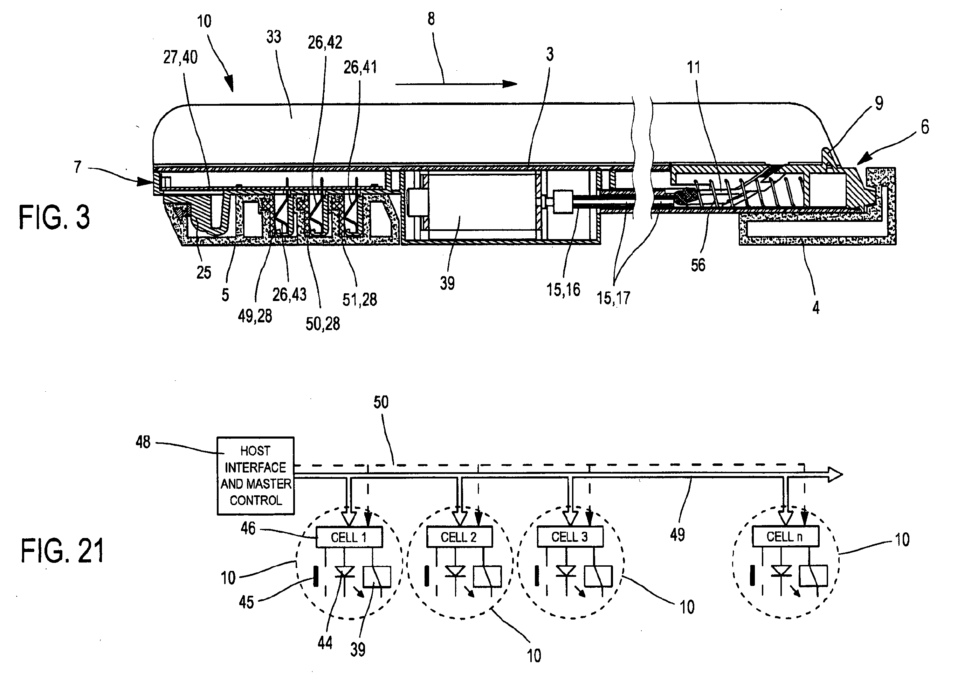

Comme illustré sur les figures 2 et 3, le dispositif 10 comprend une ligne de stockage 3, 33 rectiligne s'étendant le long d'une direction longitudinale 8, et est agencé pour stocker des objets 2; cette ligne comprend une extrémité arrière 7, une extrémité avant 6 distincte de l'extrémité arrière, et des moyens pour guider les objets de l'extrémité arrière vers l'extrémité avant. Ces moyens de guidage comprennent :
- une glissière longitudinale 3 dont la longueur s'étend selon la direction longitudinale 8 et agencée pour servir de support aux objets 2, et
- un rebord longitudinal 33 dont la longueur s'étend selon la direction longitudinale 8 et agencé pour empêcher les objets 2 de sortir de la glissière 3.

Le dispositif 10 comprend en outre une butée 9 agencée pour bloquer un des objets 22 à l'extrémité avant 6.

L'extrémité avant 6 du dispositif 10 est agencée pour reposer sur une traverse avant 4 et l'extrémité arrière 7 du dispositif 10 est agencée pour reposer sur une traverse arrière 5, de sorte que l'extrémité arrière 7 soit surélevée par rapport à l'extrémité avant 6 pour faire coulisser sous l'action de la gravité les objets 2, 22 en direction de l'extrémité avant 6 jusqu'à ce que un des objets 22 soit bloqué par la butée 9.

Le dispositif 10 comprend en outre :
- des moyens 39 pour générer une impulsion mécanique d'éjection situés à l'intérieur de la glissière 3 et au niveau de l'extrémité arrière 7, et
- des moyens 15, 16, 17, 11, 52, 53, 55, 57, 58 pour transmettre l'impulsion mécanique d'éjection à l'objet 22 bloqué par la butée, agencés pour que cet objet 22 franchisse la butée sous l'action de l'impulsion mécanique d'éjection.

On entend par impulsion mécanique une impulsion créant un mouvement mécanique d'au moins une pièce ou partie du dispositif 10.

### Moyens de génération

Les moyens de génération 39 sont alimentés en énergie électrique et commandés électriquement, et comprennent des moyens pour transformer cette énergie électrique en énergie mécanique pour générer l'impulsion mécanique d'éjection. Plus précisément, les moyens 39 de génération de l'impulsion comprennent un électroaimant 39. Les moyens de génération sont agencés pour générer au niveau de l'extrémité arrière 7 en tant qu'impulsion d'éjection une impulsion purement mécanique, sans composante d'énergie électrique : ainsi, il n'y a pas de signal électrique qui circule le long de la ligne 3, 33 de l'extrémité arrière 7 jusqu'à l'extrémité avant 6, et on écarte les risques d'électrocution ou de cours circuit.

Les moyens 39 pour générer l'impulsion mécanique sont situés au niveau de l'extrémité arrière 7, c'est-à-dire plus proche de l'extrémité arrière 7 que de l'extrémité avant 6. Ainsi, l'épaisseur de l'extrémité avant 6 est faible, ce qui permet de minimiser l'encombrement du dispositif 10. La distance 13 entre l'extrémité arrière 7 et les moyens de génération 39 est au moins deux fois plus petite que la distance 14 entre l'extrémité avant 6 et les moyens de génération 39, plus exactement de manière plus préférentielle au moins trois fois plus petite, et même au moins sept fois plus petite. Pour la localisation des moyens de génération 39 et l'estimation de ces distances 13, 14 on considère l'endroit où est convertie l'énergie électrique en énergie mécanique, c'est à dire l'endroit où nait l'impulsion purement mécanique. On remarque que, la distance 13 entre l'extrémité arrière 7 et les moyens de génération étant au moins sept fois plus petite que la distance 14 entre l'extrémité avant 6 et les moyens de génération 39, la partie centrale du dispositif 10 entre l'extrémité arrière 7 et l'extrémité avant 6 n'est pas représentée sur la figure 3, de manière à mieux discerner les détails de ces extrémités.

### Moyens de transmission

Les moyens de transmission comprennent des moyens pour transmettre l'impulsion mécanique, à partir des moyens de génération 39 et vers et jusqu'à l'extrémité avant 6. Les moyens pour transmettre l'impulsion mécanique sont agencés pour transmettre l'impulsion mécanique à partir des moyens de génération 39 situés au niveau de l'extrémité arrière 7 et en direction de l'extrémité avant 6 sous forme mécanique mais sans composante d'énergie électrique, notamment sans utilisation de courant électrique allant des moyens de génération 39 vers l'extrémité avant 6. Ainsi, on minimise les risques d'électrocution ou de création de cours circuit, par exemple un court circuit par une vis, un doigt d'un utilisateur ou par un liquide tel un sirop s'échappant d'une boite de sirop qui fuit. Les moyens pour transmettre l'impulsion mécanique sont agencés pour transmettre l'impulsion mécanique sous la forme d'une force qui pousse en direction de l'extrémité avant et de la butée 9.

Plus précisément, les moyens de transmission comprennent :
- au niveau de l'extrémité avant, un moyen élévateur 11 situé à l'intérieur de la glissière 3 dans sa position de repos et agencé pour, sous l'action de l'impulsion d'éjection, entrer en contact avec l'objet 22 bloqué par la butée 9 et surélever cet objet 22 par rapport à la butée 9, et
- au moins une tige 15 reliant les moyens de génération 39 au moyen élévateur 11 et transmettant l'impulsion mécanique sous la forme d'une force qui pousse en direction de l'extrémité avant et de la butée 9.

La tige 15 est située à l'intérieur de la glissière 3. La tige 15 comprend un corps creux longitudinal 16 et un membre longitudinal 17 qui s'étendent le long de la direction longitudinale 8.

Le membre 17 est :
- à sa première extrémité, solidaire de la partie de l'électroaimant 39 générant l'impulsion mécanique d'éjection, et
- à sa deuxième extrémité, en contact du moyen élévateur 11 situé au niveau de l'extrémité avant 6.

Le membre 17 est agencé pour se déplacer et coulisser à l'intérieur du corps creux 16 selon la direction longitudinale 8 pour transmettre l'impulsion mécanique des moyens de génération vers l'extrémité avant 6 par un mouvement du membre 17 à l'intérieur du corps creux 16. Le contact entre le membre 17 et le corps creux 16 est limité pour ne pas perdre trop d'énergie par frottement entre le membre 17 et le corps creux 16 et pour ne pas diminuer l'efficacité de l'impulsion d'éjection.

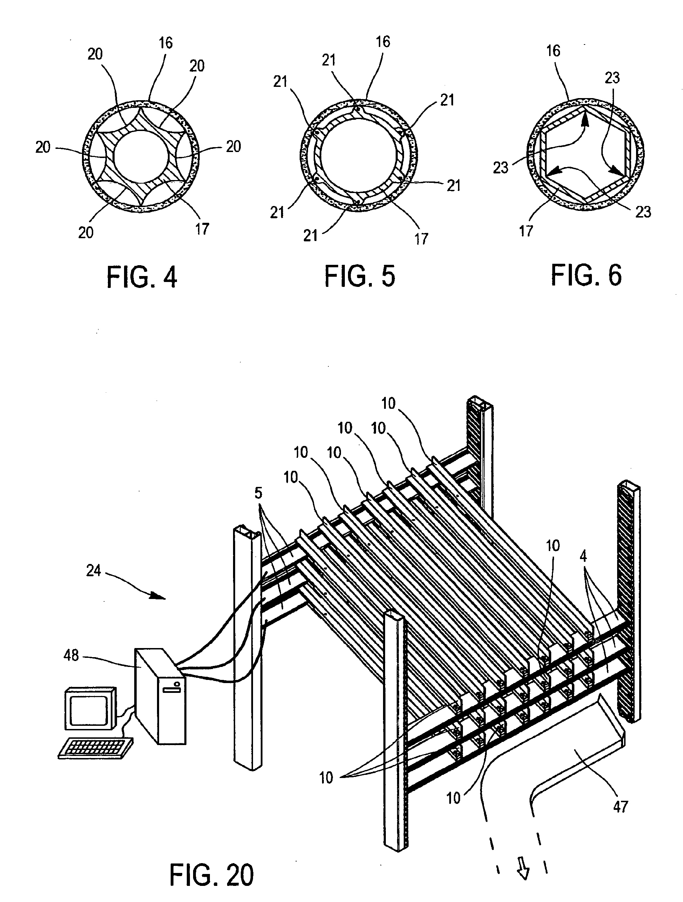

Les figures 4 à 6 sont des vues de coupe, selon un plan sensiblement perpendiculaire à la direction longitudinale 8, de différentes variantes du membre 17 et du corps creux 16. Selon la variante considérée :
- le membre 17 est muni de cannelures 20 qui ne sont pas en contact du corps creux 16, comme représenté sur la figure 4, ou
- le membre 17 est muni de bosses 21 ou reliefs qui sont en contact du corps creux 16, comme représenté sur la figure 5, ou
- le corps creux 16 a, selon un plan de coupe sensiblement perpendiculaire à la direction longitudinale 8, une forme cylindrique et le membre 17 a, selon ce même plan de coupe, une forme polygonale, le corps 16 et le membre 17 étant en contact par les angles 23 du polygone formé par le membre 17, comme représenté sur la figure 6. Le polygone est un polygone régulier. Plus précisément, le polygone est un hexagone.

Ainsi, le membre 17 n'est en contact du corps creux 16 que par des lignes de contact parallèles à la direction longitudinale 8 ou par des points de contact, sans surface de contact entre le corps creux 16 et le membre 17. Ainsi, on minimise le frottement et on améliore l'efficacité de la transmission de l'impulsion d'éjection vers le moyen élévateur 11.

Le dispositif 10 comprend des moyens pour caler et stabiliser mécaniquement le corps creux 16 par rapport à la glissière 3, c'est-à-dire pour empêcher le mouvement du corps creux 16 par rapport à la glissière 3. Plus exactement, le corps creux 16 est stabilisé par rapport à la glissière 3 aux moyens d'ailettes 71 reliant le corps 16 à la glissière 3.

Dans un procédé de fabrication selon l'invention, le dispositif 10 est fabriqué en insérant le corps creux 16 dans la glissière 3. Les ailettes 71 sont aussi insérées dans la glissière 3 pour caler le corps creux 16 dans la glissière 3. Ce procédé est avantageux par rapport au cas où le corps creux 16 et la glissière seraient fabriqués d'une seule pièce, par exemple dans un même profilé en aluminium : en effet, dans ce dernier cas, le corps creux 16 serait écrasé lors de la découpe du profil en aluminium, alors que selon l'invention on découpe le profil de la glissière 3 puis on insère le corps creux 16 qui est calé par les ailettes 71.

La glissière longitudinale 3 et le rebord longitudinal 33 forme une seule pièce en aluminium. Par contre, le membre 17 est en matière plastique et est fabriqué par moulage de matière plastique. Ainsi, on allège le membre 17, et on améliore l'efficacité de la transmission de l'impulsion d'éjection vers le moyen élévateur 11.

### Moyens de connexion

Comme illustré sur la figuré 3, le dispositif 10 comprend en outre des moyens de connexion 25, 26 pour connecter l'extrémité arrière 7 à une installation de délivrance 24 qui comprend au moins un couple de traverse avant 4 et de traverse arrière 5.

Les moyens de connexion comprennent :
- des moyens de connexion mécanique 25, plus précisément des moyens de clipsage 69, 70, agencés pour fixer l'extrémité arrière 7 à une traverse arrière 5 de l'installation de délivrance 24, lesdits moyens de clipsage 69, 70 comprenant une languette 69 disposée sur l'extrémité arrière 7 et agencée pour se fixer de manière indexée dans des rainures 72 de la traverse arrière 5, et
- des moyens 26 pour connecter électriquement l'extrémité arrière 7 à l'installation de délivrance 24.

Ainsi, on combine les fonctions de connexion mécanique et électrique uniquement au niveau de l'extrémité arrière 7, et le dispositif 10 est plus compact.

Les moyens pour connecter électriquement l'extrémité arrière 7 à l'installation de délivrance 24 comprennent plusieurs languettes souples 26, plus exactement trois languettes 26.

Chacune de ces languettes 26 est métallique et conductrice d'électricité, est agencée pour conduire un signal électrique, et est agencée pour former un contact de connexion électronique 41, 42 ou 43. Chacune de ces languettes est connectée électriquement à des moyens électriques 27 décrits par la suite.

En outre, chacune de ces languettes 26 est agencée pour être déformée dans un état connecté à une traverse arrière 5 (tel que représenté sur la figure 3) par rapport à un état non connecté à une traverse arrière 5. Dans leur état connecté, chaque languette est maintenue écrasée contre un contact métallique 28 porté par la traverse arrière 5.

Finalement, les moyens de connexion 25, 26 sont décalés longitudinalement par rapport aux moyens de génération 39, c'est-à-dire que les moyens de connexion 25, 26 et les moyens de génération 39 sont décalés les uns par rapport aux autres le long de la direction longitudinale 8. Grâce à ce décalage, les moyens de connexion 25, 26 et les moyens de génération 39 ne sont pas superposés, ce qui permet de minimiser l'épaisseur du dispositif 10. Le dispositif 10 possède, à l'endroit où sont situés les moyens de connexion 25, 26, une épaisseur inférieure à l'épaisseur du dispositif 10 à l'endroit où sont situés les moyens de génération 39. On mesure les épaisseurs de n'importe quel composant perpendiculairement à la direction 8 et dans le plan de la figure 3.

Le dispositif 10 ne comprend pas de moyens pour connecter directement l'extrémité avant 6 à la traverse avant 4 de l'installation de délivrance 24, en particulier pas de moyens pour connecter électriquement ou pour fixer l'extrémité avant 6 à la traverse avant 4. L'extrémité avant 6 repose simplement sur la traverse avant 4. Ainsi, avantageusement, toute l'entretient de l'installation 24, notamment en ce qui concerne le montage et le démontage de dispositif 10 n'est fait que d'un seul côté de l'installation 24, ce qui facilite grandement l'entretient de l'installation 24, en particulier si l'installation 24 est contre un mur de sorte que sa face avant soit inaccessible. En outre, le fait de ne pas avoir de connexion électrique au niveau de l'extrémité avant 6 simplifie tout le circuit électrique qui se trouve regroupé de façon compacte du côté de l'extrémité arrière 7.

En référence à la figure 2, on remarque qu'au sein d'une installation de délivrance 24 selon l'invention, l'espace minimum entre deux dispositifs 10 c'est-à-dire l'épaisseur totale d'un dispositif 10 plus l'espace nécessaire à l'éjection d'un objet 2 est égale à la somme de :
- l'épaisseur de la traverse avant 4,
- l'épaisseur de la glissière 3 au niveau de l'extrémité avant 6 qui est au moins égale à l'épaisseur du moyen élévateur 11, mais qui est inférieure à l'épaisseur de l'électroaimant 39,
- l'épaisseur de la butée 9 et
- l'épaisseur de l'objet 22 à éjecter.

Ainsi, l'invention permet un gain considérable de l'encombrement du dispositif 10, et permet donc de placer plus de dispositifs de délivrance 10 dans une installation de délivrance 24. Typiquement, l'espace minimum entre deux rangées de dispositifs 10 superposées l'une sur l'autre est diminué d'environ 1,3 centimètres, soit un gain d'épaisseur d'environ 15%. Comme on le voit sur la figure 2, l'épaisseur de la glissière 3 au niveau de l'extrémité avant 6 est plus critique que l'épaisseur de la glissière 3 au niveau de l'extrémité arrière 7 car c'est au niveau de l'extrémité avant 6 que l'on a besoin d'un espace supplémentaire entre deux dispositifs 10 pour permettre à l'objet 22 de franchir la butée.

### Moyens électroniques

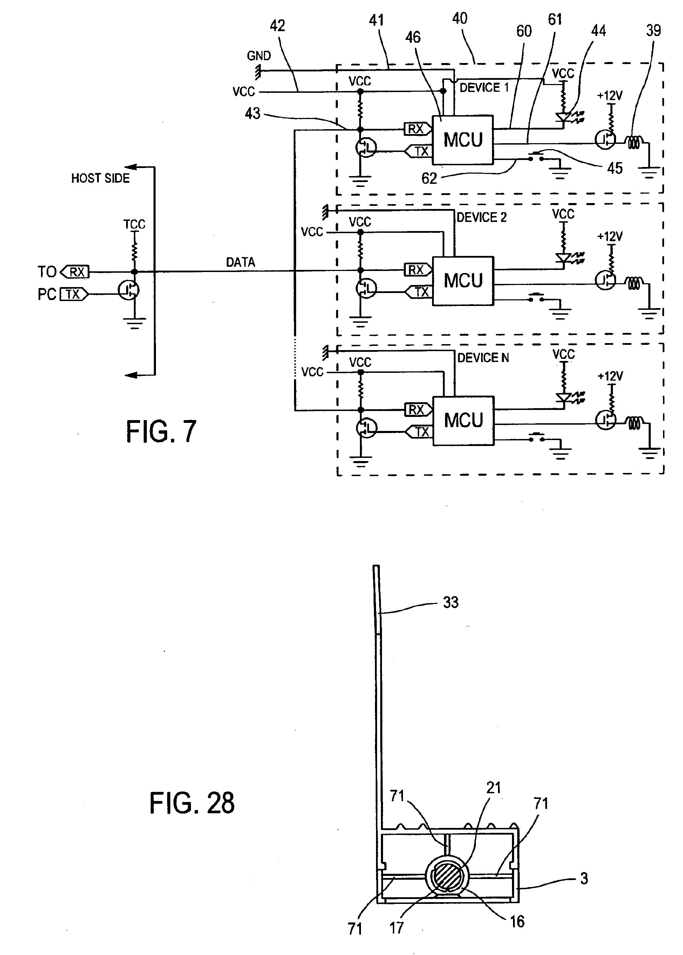

La figure 7 est un plan schématique des moyens électriques 27 du dispositif 10, disposés du côté de l'extrémité arrière 7 du dispositif 10. Les moyens électroniques 27 comprennent un circuit imprimé 40 munie de plusieurs contacts d'entrée et de sortie 41, 42, 43. En particulier, les moyens électroniques 27 comprennent trois contacts distincts:
- un contact 41 de masse, agencé pour être relié à une masse GND c'est-à-dire à un potentiel électrique nul,
- un contact 42 d'alimentation électrique, agencé pour recevoir un signal électrique alimentant les moyens électroniques 27, ce signal d'alimentation ayant une tension d'environ 24 ou 12 Volts,
- un contact 43 de données bidirectionnelles, agencé pour recevoir et envoyer des données DATA.

Les moyens électroniques 27 comprennent en outre un composant 46 pour contrôler ces données DATA envoyées et reçues par le dispositif 10, directement connecté au contact de données 43 et à la masse GND. On utilise de préférence comme composant 46 un microcontrôleur ou un composant dédié d'identification, comme par exemple le composant de la société ATMEL dont la référence est ATmega48A. Le composant 46 est notamment agencé pour commander une génération d'une impulsion mécanique d'éjection par les moyens de génération 39 en fonction des données DATA reçues par le dispositif 10.

Les moyens de génération 39 sont reliés électriquement au circuit imprimé 40.

Finalement, les moyens électroniques 27 comprennent en outre une diode électroluminescente (DEL) de visualisation 44 et un interrupteur ou bouton poussoir d'indentification 45 montés sur le circuit imprimé 40. Le bouton 45 est situé au niveau de l'extrémité arrière 7, et est donc accessible pour un utilisateur du côté de l'extrémité arrière 7. L'interrupteur 45 possède une position passante (ou position enfoncée) dans laquelle il connecte électriquement ses deux bornes et une position non passante (ou position non enfoncée) dans laquelle il ne connecte pas électriquement ses deux bornes. L'interrupteur 45 est agencé pour changer l'état logique de l'entrée 62 en fonction de sont état, l'état logique « 0 » correspondant à la position passante et l'état logique « 1 » correspondant à la position non passante.

Le contact d'alimentation 42 alimente électriquement le composant 46, la DEL 44, et l'électroaimant 39.

Le composant 46 comprend trois bornes 60, 61, 62 reliées respectivement à la DEL 44, à l'électroaimant 39 et à l'interrupteur 45. Le signal électrique à chacune de ces bornes dépend des données DATA et de la position passante ou non du bouton 45. Lorsqu'il est dans sa position passante, l'interrupteur 45 relie la borne 62 à la masse GND.

Le composant 46 du dispositif 10 possède en mémoire une adresse du dispositif. Cette adresse est un code ou ensemble de données permettant d'identifier le dispositif et de le distinguer d'autres dispositifs qui possèdent d'autres adresses.

Le composant est agencé pour mettre en oeuvre les étapes décrites par la suite :
- si le composant 46 reçoit, en provenance du contact de données 43 via sa borne RX, un signal électrique de commande d'éjection comprenant l'adresse du dispositif 10, il génère sur sa borne 61 un signal vers l'électroaimant 39 pour commander l'électroaimant qui génère alors une impulsion mécanique d'éjection. Sinon, si le composant 46 ne reçoit pas, en provenance du contact de données 43, un signal commandant une éjection avec son adresse, le composant 46 ne génère sur sa borne 61 aucun signal vers l'électroaimant.
- si un utilisateur appui sur l'interrupteur 45 pour le mettre brièvement dans sa position passante sans le maintenir dans sa position passante, de sorte que la borne 62 soit reliée brièvement (typiquement une seconde) à la masse GND, le composant 46 génère et émet de façon discrète en sortie du dispositif 10 via sa borne TX et vers le contact de données 43 un signal électrique ou électronique d'identification comprenant l'adresse du dispositif 10. Sinon, si un utilisateur n'appui pas sur l'interrupteur ou bouton 45 pour le mettre dans sa position passante, le composant 46 ne génère pas et n'émet pas de signal d'identification vers le contact de données 43. L'interrupteur ou bouton 45 est donc agencé pour permettre une commande manuelle d'une émission discrète du signal d'identification. Par émission discrète, on entend une émission isolée, limitée dans le temps et due à l'actionnement des moyens de commande 45, c'est-à-dire pas une émission continue dans le temps d'un signal constant ou périodique comme un clignotement d'une DEL par exemple, Ainsi, on économise de l'énergie par rapport à l'état de la technique dans lequel on émet en continu un signal lisible par un stylo optique, et on simplifie l'utilisation du dispositif car un stylo optique n'est plus nécessaire.
- si le composant 46 reçoit, en provenance du contact de données 43, un signal de visualisation comprenant l'adresse du dispositif 10, il génère sur sa borne 60 un signal et la DEL 44 s'allume et émet de la lumière au moins un instant.

On remarque que le contact de données 43 du dispositif est bidirectionnel ; il est agencé en effet pour pouvoir transporter à la fois :
- des données ou des signaux entrant dans le dispositif 10 comme le signal électrique de commande d'éjection ou le signal de visualisation comprenant l'adresse du dispositif 10, et
- des données ou des signaux sortant du dispositif comme le signal d'identification comprenant l'adresse du dispositif 10.

### Moyen élévateur

On va maintenant décrire, en référence aux figures 2 et 8 à 19, différentes variantes du moyen élévateur 11 comprises dans différentes variantes du dispositif 10.

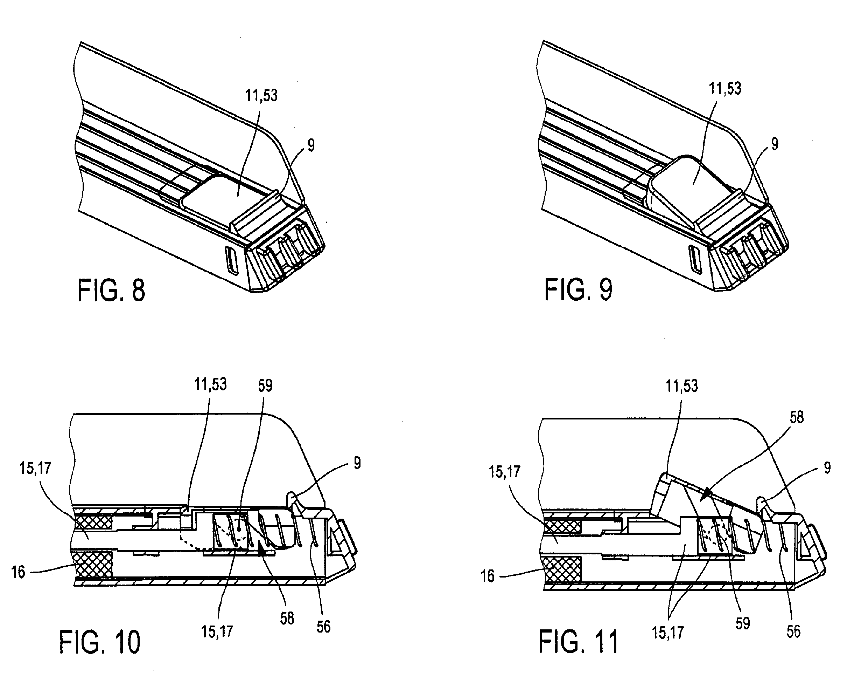

On va tout d'abord décrire, en référence aux figures 2 et 8 à 19, les caractéristiques communes des différentes variantes du moyen élévateur 11 illustrées aux figures 8 à 19. Dans ces variantes, les moyens de transmission comprennent le moyen élévateur 11 qui est monté de manière mobile par rapport à la butée 9 et aux moyens de guidage 3, 33 notamment par rapport à la glissière 3. Le moyen élévateur 11 est agencé pour, sous l'action de l'impulsion d'éjection, surélever par rapport à la butée 9 l'objet bloqué 22. Ainsi, le moyen élévateur 11 est agencé pour transmettre l'impulsion mécanique à cet objet bloqué par la butée 9 à l'extrémité avant, pour permettre à cet objet de passer au dessus de la butée et franchir cette butée 9. Plus précisément, le moyen élévateur 11 est agencé pour, sous l'action de l'impulsion d'éjection, être en contact avec l'objet 22 bloqué à éjecter et avoir un mouvement amenant le moyen élévateur 11 dans une position d'éjection, ce mouvement ayant :
- une composante vers le haut (c'est-à-dire selon la direction de la hauteur de la butée 9) surélevant par rapport à la butée 9 l'objet bloqué 22, et
- une composante dirigée vers la butée, parallèle à la direction longitudinale 8, et faisant avancer ledit objet 22 en direction de la butée, cette composante vers la butée étant agencée, à elle seule et notamment sans contribution de la gravité (par exemple dans une situation parfaitement horizontale), pour que la face de l'objet 22 initialement bloquée par la butée 9 franchisse et va au-delà de la butée 9 ; la composante dirigée vers la butée fait avancer l'objet 22 au delà de butée 9.
ces deux composantes vers le haut et vers la butée étant perpendiculaires entre elles.

La composante dirigée vers la butée facilite le passage de l'objet au-delà de la butée 9, et améliore donc la délivrance de l'objet 22. En outre, grâce à la composante dirigée vers la butée, l'importance de la gravité est moindre pour l'éjection de l'objet bloqué : ainsi, dans l'installation de délivrance 24 selon l'invention, l'inclinaison par rapport à l'horizontale des dispositifs 10 contenus dans cette installation 24 peut être moindre par rapport à l'état de la technique antérieure, ce qui permet de mettre plus de dispositifs 10 dans l'installation 24.

Le dispositif 10 comprend en outre des moyens 56 comprenant un ressort et agencés pour exercer sur le moyen élévateur 11 un effort ou une force de rappel de direction opposée à l'impulsion d'éjection. Ces moyens pour exercer une force de rappel sont agencés pour replacer le moyen élévateur dans une position initiale de repos occupée par ce moyen élévateur avant qu'il ne soit soumis à l'action de l'impulsion d'éjection. Ainsi, le moyen élévateur 11 ne possède que deux positions :
- la position d'éjection lorsqu'il est soumis à l'action de l'impulsion d'éjection, et pour laquelle le moyen élévateur surélève par rapport à la butée 9 l'objet bloqué 22, et
- la position de repos, lorsqu'il n'est pas soumis à l'action de l'impulsion d'éjection, et pour laquelle le moyen élévateur ne surélève pas par rapport à la butée 9 l'objet bloqué 22.

De cette manière, le moyen élévateur 11 est particulièrement compact et on réduit l'épaisseur du dispositif selon l'invention 10, notamment par rapport à un dispositif tel que décrit dans EP 1 155 978 comprenant une roulette pour laquelle il faut éjecter quatre objets en passant par trois positions intermédiaires de la roulette avant qu'elle ne retourne dans sa position initiale.

Dans la position d'éjection du moyen élévateur 11, le ressort 56 est comprimé. Dans la position de repos du moyen élévateur 11, le ressort 56 est détendu.

En outre, le moyen élévateur 11 est rigide et non flexible. Par non flexible, on entend le fait que pour passer de sa position de repos à sa position d'éjection sous l'action de l'impulsion d'éjection, le moyen 11 ne flanche pas ou ne fléchie pas de façon continue. Ainsi, le moyen élévateur 11 se distingue d'une lamelle d'acier de faible épaisseur qui fléchie de façon continue dans sa longueur. Le moyen élévateur 11 peut comprendre une unique pièce rigide ou plusieurs pièces rigides reliées entre elles par une ou plusieurs jonctions. Ainsi, on réduit le bruit émis par le moyen élévateur 11 et donc sa nuisance sonore par rapport au claquement d'une lame flexible qui se déforme et fléchie, ce qui est très important notamment dans le cas d'une installation de délivrance 24 comprenant plusieurs centaines de dispositifs 10 qui distribuent en parallèle plusieurs objets par secondes notamment dans une pharmacie.

En outre, les moyens de génération 39 sont agencés pour générer l'impulsion de sorte que l'impulsion soit dirigée de l'extrémité arrière 7 vers l'extrémité avant 6 selon la direction longitudinale 8 du dispositif 10 (vers la butée 9), et les moyens de transmission comprennent des moyens pour transformer l'impulsion d'éjection dirigée vers l'extrémité avant en le mouvement du moyen élévateur. Ainsi, les moyens de transformation sont agencés pour transformer une translation de la tige 15 parallèle à la direction longitudinale en le mouvement du moyen d'éjection 11 dirigé vers le haut et vers l'avant.

Les moyens pour exercer la force de rappel comprennent un ressort 56.

On va maintenant décrire, en référence aux figures 8 à 11, une première variante du moyen élévateur 11. La figure 8 est une vue de trois quart de l'extrémité avant d'une première variante du dispositif 10, le moyen élévateur 11 étant dans sa position de repos. La figure 9 est une vue de trois quart de l'extrémité avant de la première variante du dispositif 10, le moyen élévateur 11 étant dans sa position d'éjection. La figure 10 est une vue de coupe de profil de l'extrémité avant de la première variante du dispositif 10, le moyen élévateur 11 étant dans sa position de repos. La figure 11 est une vue de coupe de profil de l'extrémité avant de la première variante du dispositif 10, le moyen élévateur 11 étant dans sa position d'éjection.

Dans cette première variante, le moyen élévateur 11 comprend une partie pivotante 53, montée de façon pivotante par rapport à la butée 9.

Dans cette première variante, les moyens pour transformer l'impulsion d'éjection dirigée vers l'extrémité avant en le mouvement du moyen élévateur comprennent une rainure 58 solidaire de la partie pivotante 53, une butée 59 solidaire du membre 17 étant agencée pour coulisser à l'intérieur de cette rainure 58.

Lorsque le moyen élévateur est dans sa position d'éjection, la partie pivotante 53 présente une pente décroissante en direction de la butée 9 comme illustré sur les figures 9 et 11.

La tige 15, en particulier le membre 17, est en contact de la partie pivotante 53, le ressort 56 étant agencé pour maintenir une pression sur la partie pivotante 53 et ainsi maintenir le contact entre la partie pivotante 53 et le membre 17.

Les moyens 56 sont agencés pour exercer sur le moyen élévateur 11 un effort ou une force de rappel de direction opposée à l'impulsion d'éjection en poussant sur le moyen élévateur.

La rainure 58 est agencée :
- pour guider la partie pivotante 53 de la position de repos du moyen élévateur vers la position d'éjection du moyen élévateur, sous l'action de la tige 15 et en particulier du membre 17 se déplaçant selon la direction longitudinale 8 vers l'extrémité avant 6, le membre 17 étant en contact de la partie 53 et se déplaçant sous l'action de l'impulsion mécanique d'éjection, et
- pour guider la partie pivotante 53 de la position d'éjection du moyen élévateur vers la position de repos du moyen élévateur sous l'action de la force de rappel des moyens de rappel 56 lorsque le moyen élévateur 11 cesse d'être soumis à l'impulsion mécanique d'éjection.

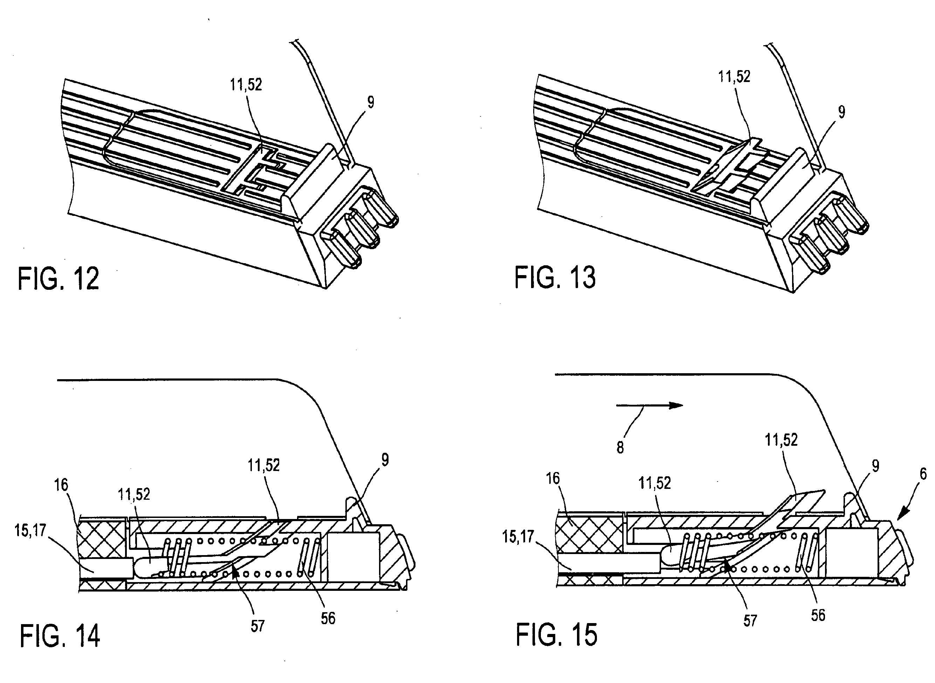

On va maintenant décrire, en référence aux figures 12 à 15, une deuxième variante du moyen élévateur 11. La figure 12 est une vue de trois quart de l'extrémité avant d'une deuxième variante du dispositif 10, le moyen élévateur 11 étant dans sa position de repos. La figure 13 est une vue de trois quart de l'extrémité avant de la deuxième variante du dispositif 10, le moyen élévateur 11 étant dans sa position d'éjection. La figure 14 est une vue de coupe de profil de l'extrémité avant de la deuxième variante du dispositif 10, le moyen élévateur 11 étant dans sa position de repos. La figure 15 est une vue de coupe de profil de l'extrémité avant de la deuxième variante du dispositif 10, le moyen élévateur 11 étant dans sa position d'éjection.

Dans cette deuxième variante, le moyen élévateur 11 comprend une partie mobile 52 agencée pour, sous l'action de l'impulsion d'éjection, placer le moyen élévateur dans sa position d'éjection pour laquelle la partie mobile 52 présente une pente croissante (éventuellement courbe) en direction de la butée 9 comme illustré sur les figures 13 et 15. De cette manière, on facilite l'éjection et la délivrance de l'objet 22 par rapport à la première variante de moyen élévateur selon l'invention. Cette pente est dite croissante car, comme illustré dans la figure 15, en suivant la partie mobile 52 le long la direction longitudinale 8 de l'extrémité arrière 7 vers l'extrémité avant 6, la partie mobile est de plus en plus haute, la hauteur de la partie mobile étant définie selon la direction selon laquelle la butée 9 pointe et dépasse de la glissière 3.

Dans cette deuxième variante, les moyens pour transformer l'impulsion d'éjection dirigée vers l'extrémité avant en le mouvement du moyen élévateur comprennent une rainure 57 solidaire de la glissière 3 et de la butée 9, la partie mobile 52 étant agencée pour coulisser à l'intérieur de cette rainure 57.

La tige 15, en particulier le membre 17, est en contact de la partie mobile, le ressort étant agencé pour maintenir une pression sur la partie mobile 52 et ainsi maintenir le contact entre la partie mobile 52 et le membre 17. La rainure 57 est agencée :
- pour guider la partie mobile 52 de la position de repos du moyen élévateur vers la position d'éjection du moyen élévateur sous l'action de la tige 15 et en particulier du membre 17 se déplaçant selon la direction longitudinale 8 vers l'extrémité avant 6, le membre 17 étant en contact de la partie 52 et se déplaçant sous l'action de l'impulsion mécanique d'éjection, et
- pour guider la partie mobile 52 de la position d'éjection du moyen élévateur vers la position de repos du moyen élévateur sous l'action de la force de rappel des moyens de rappel 56 lorsque le moyen élévateur 11 cesse d'être soumis à l'impulsion mécanique d'éjection.

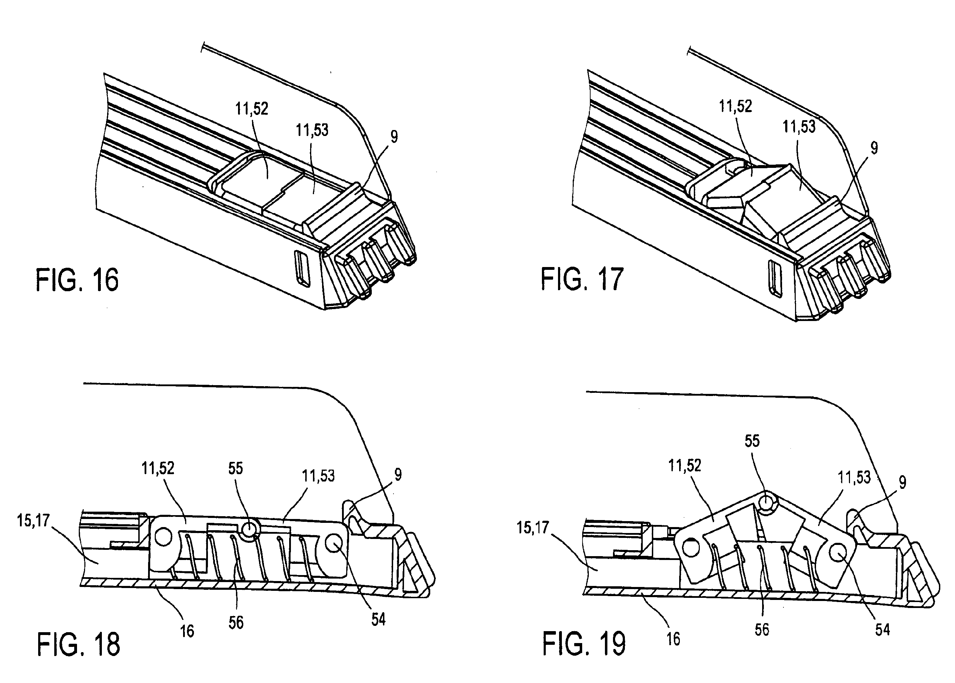

On va maintenant décrire, en référence aux figures 16 à 19, une troisième variante du moyen élévateur 11. La figure 16 est une vue de trois quart de l'extrémité avant d'une troisième variante du dispositif 10, le moyen élévateur 11 étant dans sa position de repos. La figure 17 est une vue de trois quart de l'extrémité avant de la troisième variante du dispositif 10, le moyen élévateur 11 étant dans sa position d'éjection. La figure 18 est une vue de coupe de profil de l'extrémité avant de la troisième variante du dispositif 10, le moyen élévateur 11 étant dans sa position de repos. La figure 19 est une vue de coupe de profil de l'extrémité avant de la troisième variante du dispositif 10, le moyen élévateur 11 étant dans sa position d'éjection.

Dans cette troisième variante, le moyen élévateur 11 comprend deux parties rigides reliées entre elles :
- une partie pivotante 53, montée de façon pivotante autour d'un axe rotation 54 immobile par rapport à la butée 9, et
- une partie mobile 52, agencée pour, sous l'action de l'impulsion d'éjection, se placer dans une position pour laquelle la partie mobile 52 présente une pente croissante en direction de la butée.

L'axe de rotation 54 est plus proche de la butée 9 que la partie mobile 52. Autrement dit, parmi l'axe de rotation 54 et la partie mobile 52, c'est l'axe de rotation 54 qui est le plus proche de la butée 9.

La partie mobile et la partie pivotante sont solidaires via un pivot 55.

La tige 15, en particulier le membre 17, est en contact de la partie mobile 52, le ressort 56 étant agencé pour maintenir une pression sur la partie mobile 52 et ainsi maintenir le contact entre la partie mobile 52 et le membre 17. Le pivot 55 fait la jonction entre la partie mobile 52 et la partie pivotante 53, et est agencé :
- pour plier localement le moyen élévateur 11 au niveau de ce pivot 55, de manière à guider le moyen élévateur 11, 52, 53 de sa position de repos vers sa position d'éjection sous l'action de la tige 15 et en particulier du membre 17 se déplaçant selon la direction longitudinale 8 vers l'extrémité avant 6, le membre 17 étant en contact de la partie 52 et se déplaçant sous l'action de l'impulsion mécanique d'éjection, et
- pour guider le moyen élévateur 11 de sa position d'éjection vers sa position de repos sous l'action de la force de rappel des moyens de rappel 56 lorsque le moyen élévateur 11 cesse d'être soumis à l'impulsion mécanique d'éjection.

### Installation de délivrance

La figure 20 illustre l'installation de délivrance 24 selon l'invention qui comprend :
- plusieurs dispositifs 10 tels que décrits précédemment, et
- plusieurs couples de traverse avant 4 et de traverse arrière 5

Chaque couple de traverse avant et de traverse arrière porte plusieurs dispositifs 10 disposés de façon sensiblement parallèles.

Chacun des dispositifs 10 est agencé pour émettre un signal d'identification qui lui est spécifique et différent des signaux d'identification des autres dispositifs 10.

Pour alléger la figure 20, on n'y a représenté que vingt et un dispositifs 10. En réalité, l'installation 24 comprend entre cinq cents et cinq milles dispositifs 10. L'installation 24 comprend typiquement quinze couples de traverse avant et de traverse arrière, chaque couple portant typiquement deux cents dispositifs 10.

L'installation 24 comprend en outre un tapi roulant 47 agencé pour recueillir les objets distribués par chacun des dispositifs 10. Si les objets sont des produits pharmaceutiques ou para pharmaceutiques, le tapis roulant 47 conduit les objets délivrés 2 jusqu'à l'office d'une pharmacie.

Toutes les extrémités avant des dispositifs 10 sont orientées du même côté, en direction du tapis roulant 47. Pour chaque dispositif 10, son extrémité arrière 7 est montée de façon surélevée par rapport à son extrémité avant 6, de sorte que de la gravité pousse les objets 2 en direction de l'extrémité avant.

L'installation 24 comprend en outre des moyens 48 électriques et/ou informatiques pour gérer et coordonner les commandes de l'ensemble des dispositifs 10 de l'installation 24. Les moyens de gestion 48 sont en outre agencés pour exploiter l'installation 24, pour gérer les stocks et la nature d'objets contenus dans les dispositifs 10, etc...

La figure 21 est un schéma de principe de connexion entre
- les moyens de gestion 48 (ou « HOST »), et
- chacun des dispositifs 10 :
   o porté par un couple de traverses arrière 4 et avant 5 de l'installation 24, et
   o comprenant un interrupteur 45 une DEL 44 et un électroaimant 39 comme précédemment décrit.

A chaque dispositif 10 de l'installation 24 est associée une adresse spécifique qui est différente des adresses associées aux autres dispositifs 10, et qui est mémorisée au sein du composant 46 de ce dispositif.

Comme illustré sur les figures 3 et 21, chaque traverse arrière 4 comprend au moins deux lignes conductrices. Plus précisément, chaque traverse arrière 4 comprend trois lignes conductrices dont:
- une ligne conductrice de données 49 agencée pour connecter électriquement les moyens de gestion 48 au contact de données 43 de chacun des dispositifs 10 portés par cette traverse 4,
- une ligne conductrice d'alimentation 50 agencée pour connecter électriquement les moyens de gestion 48 au contact d'alimentation 42 de chacun des dispositifs 10 portés par cette traverse 4, et
- une ligne conductrice de masse 51 (non illustrée sur la figure 21 mais vue de profil sur la figure 3) agencée pour connecter électriquement les moyens de gestion 48 au contact de masse 41 de chacun des dispositifs 10 portés par cette traverse 4.

Chaque dispositif 10 de l'installation 24 stocke un unique type ou une unique référence d'objets, nommé par la suite par exemple X, Y ou Z. Les différents dispositifs 10 de l'installation 24 stockent à eux tous différents types ou différentes références d'objets.

Les moyens de gestion 48 sont agencés pour mémoriser quel dispositif 10 de l'installation 24 stocke quel type ou référence d'objets.

Les moyens de gestion 48 sont agencés pour :
- recevoir une requête d'un objet de type X, par exemple une demande provenant d'une officine de pharmacie requérant une délivrance d'un objet de type X, notamment grâce à une saisie manuelle sur un clavier d'ordinateur ou une lecture de code à barres ou de code DATAMATRIX de l'objet de type X, et
- pour émettre en fonction de cette requête un signal électrique de commande d'éjection tel que précédemment décrit, comprenant l'adresse du dispositif 10 dans lequel sont stockés les objets de type X ; ce signal de commande est envoyé sur la ligne conductrice de données 49 de chacune des traverses arrières 4, est reçu par le contact de données 43 de chaque dispositif 10, mais n'est reconnu comme signal de commande d'éjection que par le composant 46 auquel est associé cette adresse, c'est-à-dire que par le dispositif 10 dans lequel sont stockés les objets de type X et comprenant le composant 46 dans lequel est mémorisée cette adresse et; ce composant 46 génère alors un signal vers l'électroaimant pour commander l'électroaimant qui génère alors une impulsion mécanique d'éjection éjectant un objet de type X du dispositif 10 dans lequel sont stockés les objets de type X.

Les moyens de gestion 48 sont en outre agencés pour mettre en oeuvre un mode « CREATION DE BARRE », c'est-à-dire qu'ils sont agencés pour :
- recevoir un signal d'indentification généré et émit par un dispositif 10 dont on a mis l'interrupteur 45 en position passante, si un utilisateur appui sur l'interrupteur 45 d'un des dispositifs 10 pour le mettre brièvement dans sa position passante, le composant 46 de ce dispositif 10 générant alors ce signal d'indentification vers le contact de données 43 qui est transmis aux moyens de gestion 48 via la ligne de données 49 ;
- en réponse à ce signal d'identification, émettre un signal d'allumage de DEL comprenant l'adresse du dispositif 10 générant ce signal d'identification; le signal d'allumage est émis jusqu'à la réception d'une information relative à un type ou une référence d'objets décrite ci après, et au maximum pendant un temps déterminé typiquement égal à 10 minutes ; dans le mode « CREATION DE BARRE », la DEL du dispositif 10 générant ce signal d'identification est agencée pour émettre de la lumière (par exemple de façon continue) à partir du moment où le signal d'allumage est reçu par ce dispositif 10 et pendant le temps déterminé typiquement égal à 10 minutes; ainsi, les moyens de gestion 48 sont agencés pour ne tenir compte de l'information reçue relative à un type ou une référence d'objet que pendant le temps déterminé de 10 minutes à partir de la réception du signal d'identification.

- recevoir une information relative à un type ou une référence d'objets par exemple d'un objet de type Y, notamment grâce à une saisie manuelle sur un clavier d'ordinateur ou une lecture de code à barres ou de code DATAMATRIX d'un objet de type Y ; cette information relative à un type ou une référence d'objets doit être reçue pendant le temps typiquement égal à 10 minutes, sinon cette information n'est pas pris en compte et le mode « CREATION DE BARRE » s'arrête là sans passer à l'étape suivante de mémorisation ;
- mémoriser que ce dispositif 10 dont on a reçu le signal d'indentification est destiné à stocker des objets de type Y.

Ainsi on peut modifier, au sein de la mémoire des moyens de gestion 48, des associations entre les dispositifs 10 et différents types ou références d'objets 2.

Les moyens de gestion 48 sont en outre agencés pour mettre en oeuvre un mode « INFORMATION », c'est-à-dire qu'ils sont agencés pour :
- recevoir un signal d'indentification généré et émit par un dispositif 10 dont on a mis l'interrupteur 45 en position passante, si un utilisateur appui sur l'interrupteur 45 de ce dispositif 10 pour le mettre brièvement dans sa position passante, le composant 46 de ce dispositif 10 générant alors ce signal d'indentification vers le contact de données 43 qui est transmis aux moyens de gestion 48 via la ligne de données 49 ;
- rechercher dans une mémoire interne aux moyens 48 quel type ou référence d'objets stocke ce dispositif 10, et
- afficher sur un écran ce type ou référence d'objets stocké dans ce dispositif 10.

Ainsi, on peut savoir quel produit se trouve dans un dispositif 10 si on appuie sur le bouton de ce dispositif 10.

Finalement, les moyens de gestion 48 sont agencés pour mettre en oeuvre un mode « CHARGEMENT », c'est-à-dire qu'ils sont agencés pour :
- recevoir une information relative à un type ou une référence d'objet par exemple d'un objet de type Z, notamment grâce à une saisie manuelle sur un clavier d'ordinateur ou une lecture de code à barres ou de code DATAMATRIX de l'objet de type Z, et
- pour émettre en fonction de cette information un signal de visualisation tel que précédemment décrit, comprenant l'adresse du dispositif 10 dans lequel sont stockés les objets de type Z ; ce signal de visualisation est envoyé sur la ligne conductrice de données 49 de chacune des traverses arrières 4, est reçu par le contact de données 43 de chaque dispositif 10, mais n'est reconnu comme signal de visualisation que par le composant 46 auquel est associé cette adresse, c'est-à-dire que par le dispositif 10 dans lequel sont stockés les objets de type Z ; ce composant 46 génère alors un signal pour commander une émission de lumière par la DEL 44 du dispositif 10 dans lequel sont stockés les objets de type Z, la DEL étant agencé pour émettre dans ce cas de la lumière de façon différente du mode « CREATION DE BARRE »(par exemple de façon clignotante).

Ainsi, un utilisateur peut rapidement repérer dans lequel des dispositifs 10 sont stockés les objets de type Z, notamment pour remplir ce dispositif 10 en cas de diminution du stock. Ce mode « CHARGEMENT » est le mode par défaut par rapport au mode « CREATION DE BARRE ». Ainsi, si le mode « CHARGEMENT » est mis en oeuvre dans un dispositif 10, il bloque toute possibilité de mettre simultanément en oeuvre le mode « CREATION DE BARRE » sur ce même dispositif.

Préalablement à ce mode « CHARGEMENT », les moyens de gestion 48 peuvent mettre en oeuvre un mode « VIDE », c'est-à-dire qu'ils sont agencés pour allumer les LED de chacun des dispositifs 10 pour lesquels aucun type ou référence d'objets est associé dans sa mémoire. Ainsi, on peut proposer d'indiquer à l'utilisateur les dispositifs 10 vides. Dans ce mode, l'ordinateur 48 peut proposer les dispositifs 10 qui sont disponibles par exemple module par module (Armoire par armoire) (sinon le courant risque éventuellement d'être trop important pour toute la machine si tous les dispositif 10 sont vides) en éclairant tous les dispositifs 10 qui n'ont pas encore de produit : par exemple Armoire 1, 10 DEL pendant 5 secondes puis armoire 2, 17 DEL pendant 5 sec, etc.... Les DEL s'éclairent sans clignotement. Ceci permet à l'utilisateur de choisir plus facilement sans chercher les dispositifs 10 vides.

### Moyens de fixation

Pour chaque dispositif 10, parmi l'extrémité avant 6 et l'extrémité arrière 7, l'extrémité arrière est munie de moyens de fixation 25 pour être fixée à l'installation de délivrance 24. Dans ce mode de réalisation de l'invention, l'extrémité arrière est donc aussi appelée extrémité de fixation. Chaque traverse arrière 5 de l'installation est donc aussi appelée traverse de fixation 5.

De même, pour chaque dispositif 10, parmi l'extrémité avant 6 et l'extrémité arrière 7 de ce dispositif 10, l'extrémité avant 6 est munie de moyens 64 pour être positionnée sur l'installation de délivrance 24. Dans ce mode de réalisation de l'invention, l'extrémité avant est donc aussi appelée extrémité de positionnement 6. Chaque traverse avant 4 de l'installation est donc aussi appelée traverse de positionnement 4.

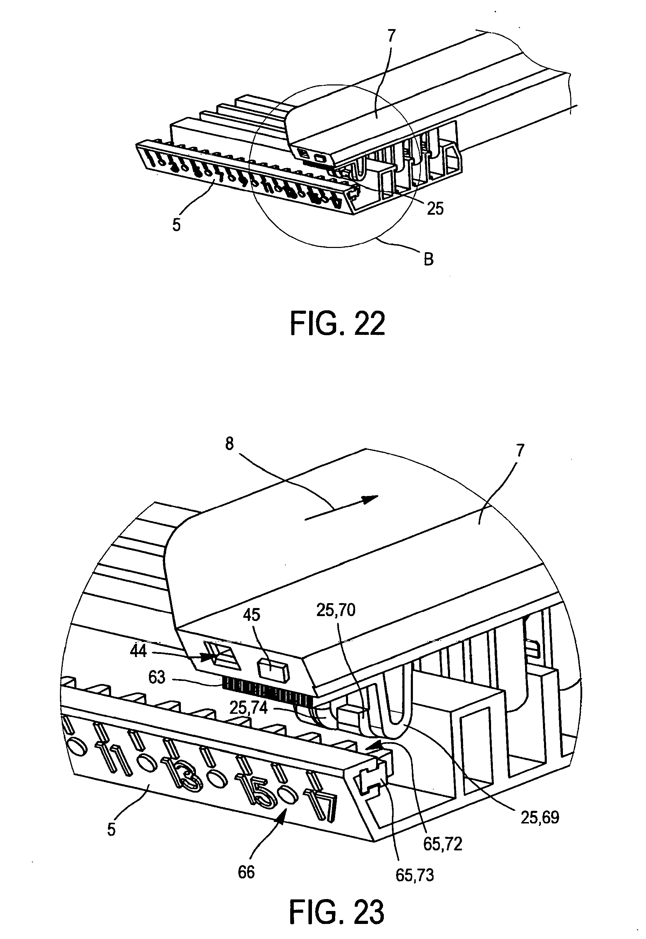

On va maintenant décrire plus en détail, en référence aux figures 22 à 27, les moyens de fixation 25 pour fixer l'extrémité de fixation 7 à une traverse de fixation 5 et les moyens de positionnement 64 pour positionner l'extrémité de positionnement 6 sur une traverse de positionnement 4.

Du côté de l'extrémité de fixation 7, chaque dispositif 10 comprend un repère d'indexation 63 agencé pour former un repère d'une position de l'extrémité de fixation 7 dans l'installation de délivrance 24. On entend par repère d'une position de l'extrémité de fixation 7 des moyens permettant de lire ou de déterminer une position de l'extrémité de fixation 7 dans l'installation de délivrance 24, par exemple par rapport à une graduation. Le repère d'indexation 63 comprend typiquement une partie sur laquelle est inscrit un curseur ou une zone hachurée.

Les moyens de fixation 25 comprennent :
- des moyens déformables de clipsage agencés pour fixer l'extrémité de fixation 7 à l'installation de délivrance 24 ; ces moyens de clipsage comprennent une languette 69 souple et flexible munie d'un ergot 70 formant une butée agencée pour bloquer le dispositif 10 clipsé à l'intérieur de la traverse de fixation 5.
- des moyens de positionnement arrière 74 agencés pour se positionner de manière indexée dans la traverse arrière 5, comme une protubérance arrière 74 agencée pour se positionner de manière indexée dans une des rainures 72 de la traverse arrière 5. Ainsi, on ne laisse qu'un nombre discret de positions possibles de l'extrémité arrière 7 sur une traverse arrière 5.

Par nombre discret de positions possibles de l'extrémité arrière 7 sur une traverse arrière 5, on veut dire par là un nombre fini de positions qui ne sont pas continues entre elles mais distantes selon un pas de préférence constant ; la distance entre ces positions est en particulier égale à la distance entre les rainures 72. Chaque rainure 72 définit une des positions discrètes de la protubérance 74 et donc de l'extrémité arrière 7 dans l'installation 24.

Les moyens de clipsage confèrent de nombreux avantages par rapport à d'autres moyens de fixation comme par exemple des vis :
- il est beaucoup plus rapide de fixer un dispositif 10 par clipsage que par une paire de vis,
- en outre, cela évite de monter incorrectement un dispositif 10 dans l'installation 24 en oubliant des vis.

Les moyens déformables de clipsage 69, 70 et le repère d'indexation 63 sont solidaires. Les moyens de clipsage 69, 70 sont agencés pour, lorsque le dispositif 10 est fixé à l'installation de délivrance via les moyens de clispage, être déformés sous l'effet d'une pression exercée sur le repère d'indexation 63 pour permettre un dégagement du dispositif 10 par rapport à l'installation de délivrance.

En outre, le repère d'indexation 63 est agencé pour, lorsque le dispositif est fixé à l'installation de délivrance via les moyens de fixation 25, être visible et accessible pour une personne utilisatrice du dispositif.

Du côté de l'extrémité de positionnement 6, le dispositif 10 comprend les moyens pour positionner 64 son extrémité de positionnement dans l'installation de délivrance 24. Les moyens de positionnement avant 64 sont agencés pour faire simplement reposer l'extrémité de positionnement 6 sur la traverse 4 de positionnement sans fixation à la traverse de positionnement 6. Les moyens de positionnement 64 comprennent au moins une protubérance 64, de préférence plusieurs protubérances 64, chacune de ces protubérances étant disposée sur l'extrémité avant 6 et s'étendant selon la direction longitudinale 8 du dispositif, chaque protubérance disposée sur l'extrémité avant 6 étant agencée pour se positionner de manière indexée dans des rainures 67 de la traverse avant 4. Ainsi, on ne laisse qu'un nombre discret de positions possibles de l'extrémité de positionnement 6 sur une traverse avant 4.

Par nombre discret de positions possibles de l'extrémité de positionnement 6 sur une traverse avant 4, on veut dire par là un nombre fini de positions qui ne sont pas continues entre elles mais distantes selon un pas de préférence constant ; la distance entre ces positions est en particulier égale à la distance entre les rainures 67. Chaque rainure 67 définit une des positions discrètes de la ou des protubérance(s) 64 et donc de l'extrémité avant 6 dans l'installation 24.

On va maintenant décrire, toujours en référence aux figures 22 à 27, les traverses de fixation 5 et de positionnement 4 de l'installation de délivrance 24 qui comprend plusieurs dispositifs 10 selon l'invention.

Chaque traverse de fixation 5 comprend des moyens complémentaires 65 aux moyens de fixation 25 de ces dispositifs montés dans l'installation, pour fixer chaque extrémité de fixation 7 des dispositifs 10 à l'installation de délivrance. Les moyens complémentaires 65 aux moyens de fixation 25 sont agencés pour ne laisser qu'un nombre discret de positions prédéterminées de chaque extrémité de fixation 7 sur l'au moins une traverse de fixation 5. Ces positions prédéterminées de chaque extrémité de fixation 7 sont alignées sensiblement perpendiculairement à la direction longitudinale 8 des dispositifs de délivrance 10 dont les extrémités de fixation 7 sont fixées sur l'au moins une traverse de fixation 5. Les moyens complémentaires 65 aux moyens de fixation 25 comprennent :
- des moyens 73 de forme complémentaire aux moyens déformables de clipsage, comme par exemple une barre 73 agencée pour bloquer l'ergot 70 du dispositif 10 clipsé à l'intérieur de la traverse de fixation 5, et
- des moyens 72 de forme complémentaire aux moyens de positionnement arrière 74, agencés pour positionner les moyens de positionnement arrière 74 de manière indexée dans la traverse arrière 5, de manière à ne laisser qu'un nombre discret de positions possibles de l'extrémité arrière 7 sur la traverse arrière 5 ; par exemple, si les moyens de positionnement arrière 74 comprennent une protubérance arrière 74, les moyens de forme complémentaire aux moyens de positionnement arrière 74 comprennent des rainures 72 agencées pour positionner la protubérance 74 de manière indexée dans la traverse arrière 5, de manière à ne laisser qu'un nombre discret de positions possibles de la protubérance 74 et donc de l'extrémité arrière 7 sur la traverse arrière 5.

Chaque traverse de fixation 5 est en outre munie d'une échelle d'indexation 66 agencée pour indiquer la position de chaque extrémité de fixation 7 fixée sur cette traverse de fixation 5. Cette échelle d'indexation 66 comprend par exemple une graduation ou des indications (par exemple une série de numéros croissante ou décroissante ou une série de lettres ou de symboles classés selon un ordre déterminé). L'échelle d'indexation 66 de chaque traverse de fixation 5 est agencée pour que, lorsqu'un dispositif de délivrance est fixé à cette traverse de fixation 5, l'échelle d'indexation 66 de cette traverse de fixation 5 et le repère d'indexation 63 de ce dispositif sont superposés. L'échelle d'indexation 66 de chaque traverse de fixation 5 est agencée pour ne pas être occultée, même partiellement, par un dispositif de délivrance 10 fixé à cette traverse de fixation 5.

En outre, chaque traverse de positionnement 4 de l'installation de délivrance comprend en outre des moyens complémentaires 67 aux moyens de positionnement 64 des dispositifs 10. Ces moyens complémentaires 67 aux moyens de positionnement 64 sont agencés pour ne laisser qu'un nombre discret de positions prédéterminées de chaque extrémité de positionnement 6 sur l'au moins une traverse de positionnement 4. Les positions prédéterminées de chaque extrémité de positionnement 6 sont alignées sensiblement perpendiculairement à la direction longitudinale 8 des dispositifs de délivrance 10 dont les extrémités de positionnement 6 sont positionnées sur l'au moins une traverse de positionnement 4.

Chaque traverse de positionnement 4 est munie d'une échelle d'indexation 68 agencée pour indiquer la position de chaque extrémité de positionnement 6 sur cette traverse de positionnement 4. Cette échelle d'indexation 68 comprend par exemple une graduation ou des indications (par exemple une série de numéros croissante ou décroissante ou une série de lettres ou de symboles classés selon un ordre déterminé). L'échelle d'indexation 68 de chaque traverse de positionnement 4 est agencée pour ne pas être occultée, même partiellement, par un dispositif de délivrance 10 positionné sur cette traverse de positionnement 4.

Les traverses de positionnement 4 et de fixation 5 sont agencées par couple, et pour chaque couple de traverses 4, 5:
- la traverse de positionnement 4 et la traverse de fixation 5 de ce couple s'étendent sensiblement parallèlement, et
- la projection des indications ou des graduations de l'échelle d'indexation 66 de la traverse de fixation 5 de ce couple sur l'échelle d'indexation 68 de la traverse de positionnement 4 de ce même couple se superposent.

Ainsi, pour correctement monter chaque dispositif 10 dans l'installation 24, il suffit de s'assurer que l'extrémité de fixation 7 et l'extrémité de positionnement 6 de chaque dispositif ont une position correspondant à une même indication ou graduation à la fois :
- sur l'échelle d'indexation 66 de la traverse de fixation 5 sur laquelle est monté ce dispositif, et
- sur l'échelle d'indexation 68 de la traverse de positionnement 4 sur laquelle est monté ce dispositif.

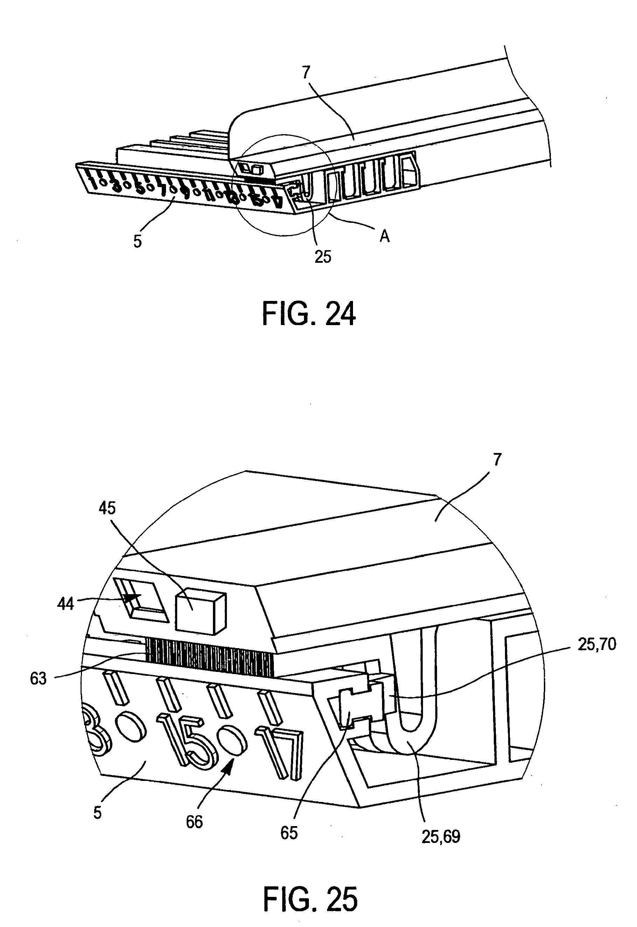

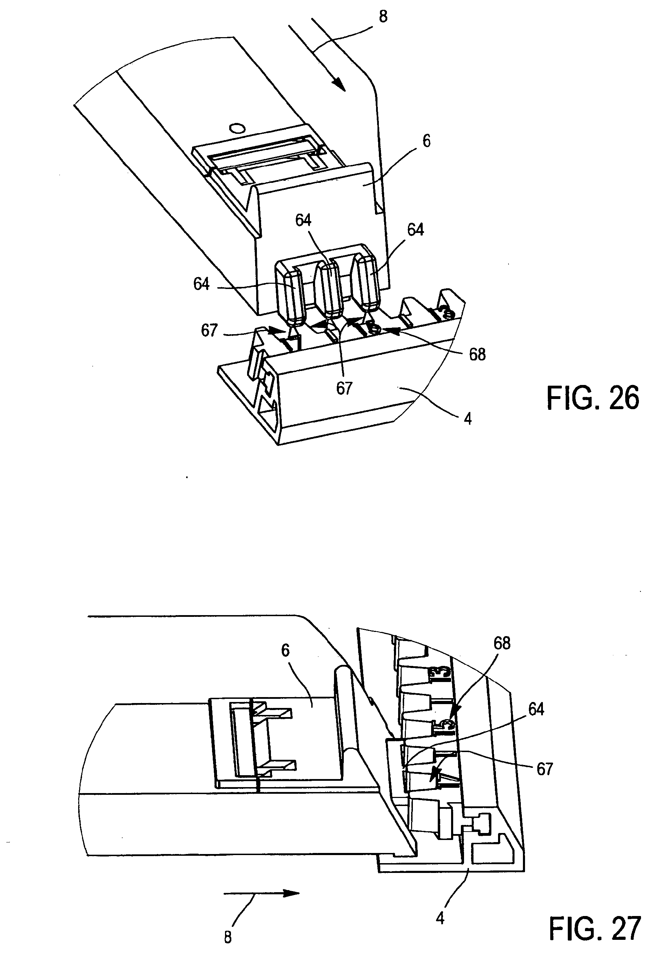

Ceci évite de monter en biais ou de travers un dispositif 10. Par exemple, en référence aux figures 25 et 27, on monte l'extrémité de fixation 7 et l'extrémité de positionnement 6 au niveau d'une même graduation correspondant au nombre 16 ou à l'intervalle compris entre 15 et 17. On remarque que, pour que la projection des graduations ou indications de l'échelle d'indexation 66 de la traverse de fixation 5 se superposent avec les graduations ou indications de l'échelle d'indexation 68 de la traverse de positionnement 4, les graduations ou indications de l'échelle d'indexation 66 sont des nombres classés de manière croissante alors que les graduations ou indications de l'échelle d'indexation 68 sont ces mêmes nombres classés de manière décroissante.

Bien sûr, l'invention n'est pas limitée aux exemples qui viennent d'être décrits et de nombreux aménagements peuvent être apportés à ces exemples sans sortir du cadre de l'invention.

Par exemple, dans une variante de l'un quelconque des modes de réalisation précédemment décrit, les moyens 56 comprennent, à la place d'un ressort, l'électroaimant 39 et des moyens pour fixer de manière solidaire le membre 17 et le moyen élévateur, de sorte que l'électroaimant soit agencé pour exercer sur le moyen élévateur 11, après l'impulsion d'éjection, un effort ou une force de rappel de direction opposée à l'impulsion d'éjection en tirant sur la moyen élévateur via le membre 17. Cependant, cette variante est plus compliquée et couteuse à mettre en oeuvre.

Dans une variante de l'un quelconque des modes de réalisation précédemment décrit, la ligne de données 49 est remplacée par des moyens de communication sans fil comme par exemple un système Wi-Fi.

Dans une variante illustrée sur la figure 28 de l'un quelconque des modes de réalisation précédemment décrit, c'est plutôt le corps creux 16 qui est muni de cannelures qui ne sont pas en contact du membre longitudinal et/ou de bosses ou reliefs 21 qui sont en contact du membre longitudinal 17, de sorte que le membre longitudinal 17 n'est en contact du corps creux 16 que par des lignes ou des points de contact, sans surface de contact entre le corps creux et le membre longitudinal.

Enfin, dans une variante illustrée sur la figure 29 de l'un quelconque des modes de réalisation précédemment décrit, la butée 9 ne fait pas partie du dispositif selon l'invention mais fait partie de l'installation 24, plus précisément de la traverse avant 4 à laquelle est fixé le dispositif selon l'invention 10. Le dispositif 10 est alors agencé pour être fixé à l'installation de sorte que la butée 9 bloque à l'extrémité avant 6 un des objets stocké dans le dispositif 10. Comme précédemment, le moyen élévateur 11 est agencé pour transmettre l'impulsion mécanique à cet objet bloqué par la butée 9 à l'extrémité avant, pour permettre à cet objet de passer au dessus de la butée et franchir cette butée 9.

## Revendications

1. Dispositif (10) pour délivrer des objets (2), ce dispositif comprenant :
- une ligne de stockage agencée pour stocker les objets, cette ligne comprenant une extrémité arrière (7) et une extrémité avant (6) distincte de l'extrémité arrière,
- des moyens (39) pour générer une impulsion mécanique d'éjection, et
- des moyens (15, 16, 17, 11, 52, 53, 55, 57, 58) pour transmettre l'impulsion mécanique à un des objets (22) bloqué par une butée (9) à l'extrémité avant,
- les moyens de transmission comprennent des moyens (15, 16, 17) pour transmettre l'impulsion mécanique à partir des moyens de génération et en direction de l'extrémité avant (6),
**caractérisé en ce que** les moyens (39) pour générer l'impulsion mécanique sont situés au niveau de l'extrémité arrière (7).

2. Dispositif selon la revendication 1, **caractérisé en ce que** les moyens (39) de génération comprennent des moyens pour transformer une énergie électrique en énergie mécanique pour générer l'impulsion mécanique d'éjection.

3. Dispositif selon la revendication 1 ou 2, **caractérisé en ce que** les moyens (39) de génération sont agencés pour générer en tant qu'impulsion d'éjection, au niveau de l'extrémité arrière, une impulsion purement mécanique dénuée de composante d'énergie électrique.

4. Dispositif selon l'une quelconque des revendications précédentes, **caractérisé en ce que** les moyens (39) de génération de l'impulsion comprennent un électroaimant.

5. Dispositif selon l'une quelconque des revendications précédentes, **caractérisé en ce que** la ligne de stockage est rectiligne et s'étend le long d'une direction longitudinale (8).

6. Dispositif selon l'une quelconque des revendications précédentes, **caractérisé en ce que** les moyens de transmission (15, 16, 17, 11, 52, 53, 55, 57, 58) comprennent un corps creux longitudinal (16) et un membre longitudinal (17), le membre (17) étant agencé pour coulisser à l'intérieur du corps creux (16) pour transmettre l'impulsion mécanique par un mouvement du membre (17) à l'intérieur du corps creux (16).

7. Dispositif selon la revendication 6, **caractérisé en ce que** le membre (17) est muni de cannelures (20) qui ne sont pas en contact du corps creux (16) et/ou de bosses (21) ou reliefs qui sont en contact du corps creux (16).

8. Dispositif selon la revendication 6 ou 7, **caractérisé en ce que** le membre (17) n'est en contact du corps creux (16) que par des lignes ou des points de contact, sans surface de contact entre le corps creux (16) et le membre (17).

9. Dispositif selon l'une quelconque des revendications 6 à 8, **caractérisé en ce que** le corps creux (16) a une forme cylindrique et le membre (17) a une forme polygonale.

10. Dispositif selon l'une quelconque des revendications 6 à 9, **caractérisé en ce que** le membre (17) est en matière plastique.

11. Dispositif selon l'une quelconque des revendications précédentes, **caractérisé en ce qu'**il comprend en outre des moyens de connexion (25, 26, 41, 42, 43) pour connecter l'extrémité arrière à une installation de délivrance (24).

12. Dispositif selon la revendication 11, **caractérisé en ce que** les moyens de connexion (25, 26, 41, 42, 43) comprennent des moyens de clipsage (25) agencés pour fixer l'extrémité arrière (7) à l'installation de délivrance (24) et des moyens (26, 41, 42, 43) pour connecter électriquement l'extrémité arrière (7) à l'installation de délivrance (24).

13. Dispositif selon la revendication 11 ou 12, **caractérisé en ce que** les moyens de connexion (25, 26, 41, 42, 43) sont décalés longitudinalement par rapport aux moyens de génération (39).

14. Dispositif selon l'une quelconque des revendications 11 à 13, **caractérisé en ce qu'**il possède, à l'endroit où sont situés les moyens de connexion (25, 26, 41, 42, 43), une épaisseur inférieure à l'épaisseur du dispositif à l'endroit où sont situés les moyens de génération (39).

15. Dispositif selon l'une quelconque des revendications 11 à 14, **caractérisé en ce que** moyens (25, 26, 41, 42, 43) pour connecter électriquement l'extrémité arrière (7) à l'installation de délivrance (24) comprennent plusieurs languettes souples (26) agencées pour conduire un signal électrique et agencées pour être déformées dans un état de connexion à l'installation de délivrance par rapport à un état non connecté à l'installation de délivrance.

16. Dispositif selon l'une quelconque des revendications 11 à 15, **caractérisé en ce qu'**il ne comprend pas de moyens pour connecter l'extrémité avant (6) à l'installation de délivrance (24).

17. Dispositif selon l'une quelconque des revendications 11 à 15, **caractérisé en ce qu'**il comprend des moyens électriques (27, 40, 46) pour recevoir un signal électrique de commande et pour commander les moyens de génération (39) en fonction dudit signal.

18. Dispositif selon l'une quelconque des revendications précédentes, **caractérisé en ce que** les moyens de transmission (15, 16, 17, 11, 52, 53, 55, 57, 58) comprennent, au niveau de l'extrémité avant, un moyen élévateur (11, 52, 53) agencé pour, sous l'action de l'impulsion d'éjection, surélever par rapport à la butée l'objet bloqué (22).

19. Installation de délivrance (24), **caractérisée en ce qu'**elle comprend plusieurs dispositifs (10) selon l'une quelconque des revendications précédentes.

## Patentansprüche

1. Vorrichtung (10) zur Ausgabe von Gegenständen (2), wobei diese Vorrichtung umfasst:
- eine Lagerungsstrecke, die dazu eingerichtet ist, die Gegenstände zu lagern, wobei diese Strecke ein hinteres Ende (7) und ein von dem hinteren Ende verschiedenes vorderes Ende (6) umfasst,
- Mittel (39) zur Erzeugung eines mechanischen Auswurfimpulses sowie
- Mittel (15, 16, 17, 11, 52, 53, 55, 57, 58) zur Übertragung des mechanischen Impulses auf einen der Gegenstände (22), der durch einen Anschlag (9) an dem vorderen Ende blockiert ist,
die Übertragungsmittel umfassen Mittel (15, 16, 17), um den mechanischen Impuls von den Erzeugungsmitteln aus sowie in Richtung des vorderen Endes (6) zu übertragen,
**dadurch gekennzeichnet, dass** die Mittel (39) zur Erzeugung des mechanischen Impulses im Bereich des hinteren Endes (7) gelegen sind.

2. Vorrichtung nach Anspruch 1, **dadurch gekennzeichnet, dass** die Erzeugungsmittel (39) Mittel zum Umwandeln einer elektrischen Energie in mechanische Energie, um den mechanischen Auswurfimpuls zu erzeugen, umfassen.

3. Vorrichtung nach Anspruch 1 oder 2, **dadurch gekennzeichnet, dass** die Erzeugungsmittel (39) dazu eingerichtet sind, als Auswurfimpuls im Bereich des hinteren Endes einen rein mechanischen Impuls ohne eine Komponente elektrischer Energie zu erzeugen.

4. Vorrichtung nach einem der vorhergehenden Ansprüche, **dadurch gekennzeichnet, dass** die Mittel (39) zur Erzeugung des Impulses einen Elektromagneten umfassen.

5. Vorrichtung nach einem der vorhergehenden Ansprüche, **dadurch gekennzeichnet, dass** die Lagerungsstrecke geradlinig ist und entlang einer Längsrichtung (8) verläuft.

6. Vorrichtung nach einem der vorhergehenden Ansprüche, **dadurch gekennzeichnet, dass** die Übertragungsmittel (15, 16, 17, 11, 52, 53, 55, 57, 58) einen längsverlaufenden Hohlkörper (16) und ein Längsglied (17) umfassen, wobei das Glied (17) dazu eingerichtet ist, innerhalb des Hohlkörpers (16) zu gleiten, um den mechanischen Impuls durch eine Bewegung des Gliedes (17) innerhalb des Hohlkörpers (16) zu übertragen.

7. Vorrichtung nach Anspruch 6, **dadurch gekennzeichnet, dass** das Glied (17) mit Rillen (20), die nicht mit dem Hohlkörper (16) in Kontakt sind, und/oder mit Buckeln (21) oder Erhöhungen, die mit dem Hohlkörper (16) in Kontakt sind, versehen ist.

8. Vorrichtung nach Anspruch 6 oder 7, **dadurch gekennzeichnet, dass** das Glied (17) mit dem Hohlkörper (16) nur durch Linien oder Kontaktpunkte, ohne Kontaktfläche zwischen dem Hohlkörper (16) und dem Glied (17), in Kontakt ist.

9. Vorrichtung nach einem der Ansprüche 6 bis 8, **dadurch gekennzeichnet, dass** der Hohlkörper (16) eine Zylinderform aufweist und das Glied (17) eine Vieleckform hat.

10. Vorrichtung nach einem der Ansprüche 6 bis 9, **dadurch gekennzeichnet, dass** das Glied (17) aus Kunststoff besteht.

11. Vorrichtung nach einem der vorhergehenden Ansprüche, **dadurch gekennzeichnet, dass** sie ferner Anschlussmittel (25, 26, 41, 42, 43) umfasst, um das hintere Ende an eine Ausgabeanlage (24) anzuschließen.

12. Vorrichtung nach Anspruch 11, **dadurch gekennzeichnet, dass** die Anschlussmittel (25, 26, 41, 42, 43) Festclipsmittel (25), die dazu eingerichtet sind, das hintere Ende (7) an der Ausgabeanlage (24) zu befestigen, sowie Mittel (26, 41, 42, 43) zum elektrischen Anschließen des hinteren Endes (7) an die Ausgabeanlage (24) umfassen.

13. Vorrichtung nach Anspruch 11 oder 12, **dadurch gekennzeichnet, dass** die Anschlussmittel (25, 26, 41, 42, 43) gegenüber den Erzeugungsmitteln (39) in Längsrichtung versetzt sind.

14. Vorrichtung nach einem der Ansprüche 11 bis 13, **dadurch gekennzeichnet, dass** sie an der Stelle, an der sich die Anschlussmittel (25, 26, 41, 42, 43) befinden, eine Dicke aufweist, die geringer ist als die Dicke der Vorrichtung an der Stelle, an der sich die Erzeugungsmittel (39) befinden.

15. Vorrichtung nach einem der Ansprüche 11 bis 14, **dadurch gekennzeichnet, dass** die Mittel (25, 26, 41, 42, 43) zum elektrischen Anschließen des hinteren Endes (7) an die Ausgabeanlage (24) mehrere flexible Zungen (26) umfassen, die dazu eingerichtet sind, ein elektrisches Signal zu leiten, und dazu eingerichtet sind, gegenüber einem nicht an die Ausgabeanlage angeschlossenen Zustand in einen Zustand zum Anschließen an die Ausgabeanlage verformt zu werden.

16. Vorrichtung nach einem der Ansprüche 11 bis 15, **dadurch gekennzeichnet, dass** sie keine Mittel zum Anschließen des vorderen Endes (6) an die Ausgabeanlage (24) umfasst.

17. Vorrichtung nach einem der Ansprüche 11 bis 15, **dadurch gekennzeichnet, dass** sie elektrische Mittel (27, 40, 46) umfasst, um ein elektrisches Steuersignal zu empfangen und um die Erzeugungsmittel (39) in Abhängigkeit von dem Signal zu steuern.

18. Vorrichtung nach einem der vorhergehenden Ansprüche, **dadurch gekennzeichnet, dass** die Übertragungsmittel (15, 16, 17, 11, 52, 53, 55, 57, 58) im Bereich des vorderen Endes ein Hebemittel (11, 52, 53) umfassen, das dazu eingerichtet ist, unter der Wirkung des Auswurfimpulses den blockierten Gegenstand (22) gegenüber dem Anschlag zu erhöhen.

19. Ausgabeanlage (24), **dadurch gekennzeichnet, dass** sie mehrere Vorrichtungen (10) nach einem der vorhergehenden Ansprüche umfasst.

## Claims

1. Device (10) for delivering objects (2), this device comprising:
- a storage line arranged for storing the objects, this line comprising a rear end (7) and a front end (6) separate from the rear end,
- means (39) for generating a mechanical ejection impulse, and
- means (15, 16, 17, 11, 52, 53, 55, 57, 58) for transmitting the mechanical impulse to one of the objects (22) blocked by a stop (9) at the front end,
the transmission means comprising means (15, 16, 17) for transmitting the mechanical impulse from the generating means and in the direction of the front end (6),
**characterized in that** the means (39) for generating the mechanical impulse are situated at the rear end (7).

2. Device according to claim 1, **characterized in that** the generating means (39) comprise means for converting electrical energy to mechanical energy in order to generate the mechanical ejection impulse.

3. Device according to claim 1 or 2, **characterized in that** the generating means (39) are arranged to generate as an ejection impulse, at the rear end, a purely mechanical impulse devoid of electrical energy component.

4. Device according to any one of the previous claims, **characterized in that** the impulse generating means (39) comprise an electromagnet.

5. Device according to any one of the preceding claims, **characterized in that** the storage line is rectilinear and extends in a longitudinal direction (8).

6. Device according to any one of the preceding claims, **characterized in that** the transmission means (15, 16, 17, 11, 52, 53, 55, 57, 58) comprise a longitudinal hollow body (16) and a longitudinal member (17), the member (17) being arranged in order to slide inside the hollow body (16) in order to transmit the mechanical impulse by a movement of the member (17) within the hollow body (16).

7. Device according to claim 6, **characterized in that** the member (17) is provided with grooves (20) which are not in contact with the hollow body (16) and/or bumps (21) or reliefs which are in contact of the hollow body (16).

8. Device according to claim 6 or 7, **characterized in that** the member (17) is in contact with the hollow body (16) only via lines or points of contact, with no contact surface between the hollow body (16) and the member (17).

9. Device according to any one of claims 6 to 8, **characterized in that** the hollow body (16) has a cylindrical shape and the member (17) has a polygonal shape.

10. Device according to any one of claims 6 to 9, **characterized in that** the member (17) is made from plastic material.

11. Device according to any one of the preceding claims, **characterized in that** it comprises moreover connecting means (25, 26, 41, 42, 43) for connecting the rear end to a delivery installation (24).

12. Device according to claim 11, **characterized in that** the connecting means (25, 26, 41, 42, 43) comprise clipping means (25) arranged in order to fix the rear end (7) to the delivery installation (24) and means (26, 41, 42, 43) for electrically connecting the rear end (7) to the delivery installation (24).

13. Device according to claim 11 or 12, **characterized in that** the connecting means (25, 26, 41, 42, 43) are longitudinally offset with respect to the generating means (39).

14. Device according to any one of claims 11 to 13, **characterized in that**, at the place where the connecting means (25, 26, 41, 42, 43) are situated, it has a thickness less than the thickness of the device at the place where the generating means are situated (39).

15. Device according to any one of claims 11 to 14, **characterized in that** means (25, 26, 41, 42, 43) for electrically connecting the rear end (7) to the delivery installation (24) comprise several flexible tabs (26) arranged in order to conduct an electrical signal and arranged in order to be deformed in a state connected to the delivery installation, with respect to a state unconnected to the delivery installation.

16. Device according to any one of claims 11 to 15, **characterized in that** it does not comprise means for connecting the front end (6) to the delivery installation (24).

17. Device according to any one of claims 11 to 15, **characterized in that** it comprises electrical means (27, 40, 46) for receiving an electrical control signal and for controlling the generating means (39) as a function of said signal.

18. Device according to any one of the preceding claims, **characterized in that** the transmission means (15, 16, 17, 11, 52, 53, 55, 57, 58) comprise, at the front end, lifting means (11, 52, 53) arranged in order to raise the blocked object (22) with respect to the stop, under the action of the ejection impulse.

19. Delivery installation (24), **characterized in that** it comprises several devices (10) according to any one of the preceding claims.
